(19) Europäisches Patentamt
European Patent Office
Office européen des brevets

(11) **EP 1 719 737 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(21) Anmeldenummer: **06009137.8**

(22) Anmeldetag: **03.05.2006**

(51) Int Cl.:
**C01G 23/053** (2006.01)   **B01J 21/08** (2006.01)
**B01J 37/03** (2006.01)   **C01G 23/00** (2006.01)
**C01G 23/04** (2006.01)   **B01J 35/10** (2006.01)
**B01J 35/00** (2006.01)

(54) **Verfahren zur Herstellung eines temperaturstabilen TiO2/SiO2-Mischoxids und dessen Verwendung als Katalysatorträger**

Process for the preparation of a temperature-stable TiO2/SiO2 mixed-oxide and its use as a catalyst carrier

Procédé de préparation d'un oxyde mixte TiO2/SiO2 stable en température et son application comme support de catalyseur

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.05.2005 DE 102005021623**

(43) Veröffentlichungstag der Anmeldung:
**08.11.2006 Patentblatt 2006/45**

(73) Patentinhaber: **SASOL Germany GmbH**
**20537 Hamburg (DE)**

(72) Erfinder:
* **Schimanski, Jürgen, Dr.**
**25541 Brunsbüttel (DE)**
* **Dallmann, Kai, Dr.**
**25541 Brunsbüttel (DE)**
* **ROLFS, Sönke**
**25524 Itzehoe (DE)**
* **Dölling, Kai**
**25587 Münsterdorf (DE)**
* **Brasch, Andrea**
**25704 Meldorf (DE)**
* **Freese, Ute, Dr.**
**25541 Brunsbüttel (DE)**

(74) Vertreter: **Müller Schupfner & Partner**
**Patent- und Rechtsanwaltspartnerschaft mbB**
**Schellerdamm 19**
**21079 Hamburg (DE)**

(56) Entgegenhaltungen:
**WO-A-99/43616   US-B1- 6 544 637**

* LI Z ET AL: "Comparative study of sol-gel-hydrothermal and sol-gel synthesis of titania-silica composite nanoparticles" JOURNAL OF SOLID STATE CHEMISTRY, ORLANDO, FL, US, Bd. 178, Nr. 5, Mai 2005 (2005-05), Seiten 1395-1405, XP004870126 ISSN: 0022-4596
* XIE C ET AL: "Enhanced photocatalytic activity of titania-silica mixed oxide prepared via basic hydrolyzation" MATERIALS SCIENCE AND ENGINEERING B, ELSEVIER SEQUOIA, LAUSANNE, CH, Bd. 112, Nr. 1, 15. September 2004 (2004-09-15), Seiten 34-41, XP004525760 ISSN: 0921-5107
* SWAIN J E ET AL: "CHARACTERIZATION OF TITANIA SURFACE AREA IN TITANIA/SILICA SCR CATALYSTS BY TEMPERATURE-PROGRAMMED REACTION OF 2-PROPANOL" APPLIED CATALYSIS A: GENERAL, ELSEVIER SCIENCE, AMSTERDAM, NL, Bd. 139, 1996, Seiten 175-187, XP002315692 ISSN: 0926-860X

EP 1 719 737 B1

**Beschreibung**

Die Erfindung betrifft ein Verfahren zur Herstellung eines temperaturstabilen Katalysatorträgers auf Basis von $TiO_2/SiO_2$-Mischoxiden, enthaltend 0,5 bis 95 Gew.% $SiO_2$ und zum verbleibenden Rest $TiO_2$, jeweils bezogen auf das vollständig kalzinierte Produkt.

Trägerkatalysatoren haben seit langem eine große wirtschaftliche Bedeutung und machen tonnagemäßig die größte Gruppe der heterogenen Katalysatoren aus. Sie werden u.a. zur Aufarbeitung von fossilen Rohstoffen, der Veredelung von Zwischenprodukten und der Neugewinnung chemischer Produkte genutzt. Aufgrund des weltweit fortschreitenden Umweltbewusstseins und entsprechender gesetzlicher Anforderungen haben diese zudem als Träger für Emissionsschutzkatalysatoren im Bereich der Abgasreinigung rasch an ökonomischer Bedeutung gewonnen.

So können in Industrieländern Kraftwerke und Automobile, die mit fossilen Brennstoffen betrieben werden, nur dann in Betrieb gehen, wenn sie mit entsprechend wirksamen geträgerten Emissionsschutzkatalysatoren ausgerüstet sind. Solche Trägerkatalysatoren finden Verwendung in der Entstickung (DeNOx) und Entschwefelung von Rauchgasen und im Bereich der Abgasreinigung von Automobilen.

Klassische Katalysatorträger für diese Anwendungen sind poröse Pulver oder Formkörper auf Basis von $Al_2O_3$, $SiO_2$, MgO, $TiO_2$ und $ZrO_2$. In modernen Prozessen, z.B. der Abgasreinigung, werden zunehmend auch Wabenkörper metallischen bzw. keramischen Ursprungs eingesetzt, die mit oxidischen Trägermaterialien beschichtet sind. Eine der Hauptaufgaben des Katalysatorträgers oder der Wabenkörperbeschichtung besteht darin, die Oberfläche der Aktivkomponente zu erhöhen, da generell die Katalysatoraktivität mit zunehmender Katalysatoroberfläche steigt.

Nun zeigen naturgemäß die für Trägerzwecke verwendeten einzelnen Metalloxide wie $Al_2O_3$, $SiO_2$, MgO, $TiO_2$ und $ZrO_2$ unterschiedliche Eigenschaften, z.B. in Bezug auf erzielbare Oberflächen, Porenvolumina, Acidität und chemische Inertheit. Unter diesen Metalloxiden ist $TiO_2$ bekannt für seine chemische Inertheit und ist damit besonders geeignet für die katalytische Abgasreinigung, in der bei hohen Temperaturen aggressive Gase, die z.B. $SO_x$bzw. $NO_x$ enthalten, entgiftet werden sollen.

Ein Nachteil der z.Zt. industriell angebotenen $TiO_2$-Materialien ist jedoch, dass sie niedrige Oberflächen und Porenvolumina aufweisen und daher nur sehr begrenzt einsetzbar sind. Diese kommerziell erhältlichen Katalysatorträger auf Basis Titandioxid werden hauptsächlich durch Fällungsreaktionen von titanhaltigen Salzen oder durch Flammenpyrolyse hergestellt. Aus dem zuletzt genannten Prozess erhält man unter Verwendung von $TiCl_4$ ein Titandioxid, welches aus einer kristallinen Mischphase von Anatas/Rutil (ca. 70%/30%) besteht und in der Mischphase eine Oberfläche von ca. 58 $m^2$/g aufweist (ein Verkaufsprodukt ist z.B. Degussa P 25) oder unter Verwendung von Titantetra(isopropylat) durch Hydrolyse und Kalzinieren hergestelltes Titandioxid (vertrieben u.a. von der Firma IBUTEC), welches ebenfalls aus einer kristallinen Mischphase besteht und eine Oberfläche von 106 $m^2$/g erreicht.

Von den natürlich vorkommenden 3 Modifikationen des $TiO_2$: Anatas, Brookit und Rutil, ist das Rutil die thermodynamisch stabilste. Rutil ist nicht von katalytischem Interesse, wird aber in großen Mengen als Weißpigment verwendet. Die katalytisch interessante Phase ist Anatas. Anatas wandelt sich leicht bei Temperaturen oberhalb 600°C in Rutil um und wird damit für die Katalyse unbrauchbar.

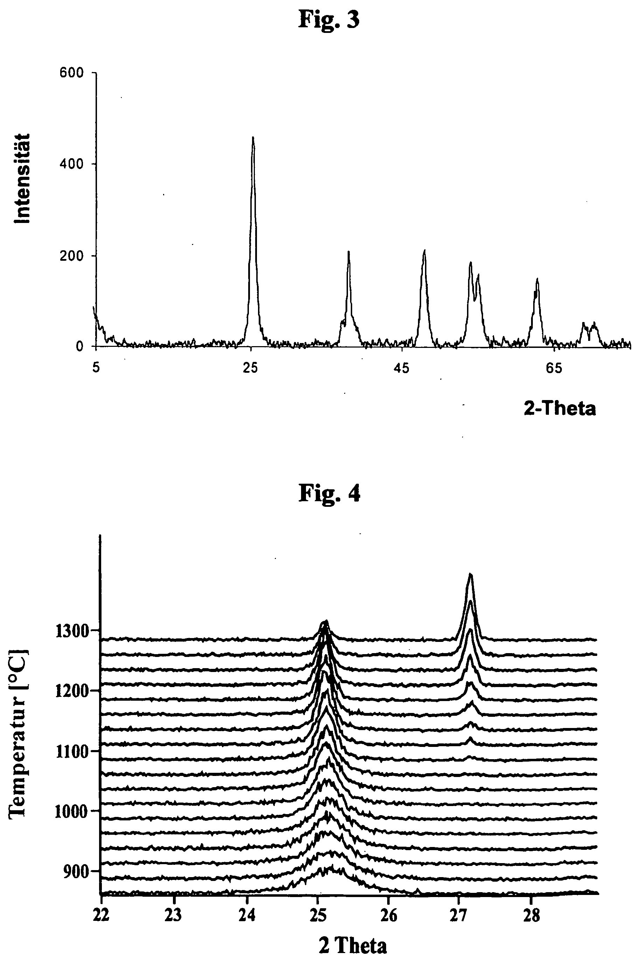

Li Z et al. ("Comparative study of sol-gel-hydrothermal and sol-gel synthesis of titania-silica composite nanoparticles" Journal of Solid State Chemistry, 178 (2005) 1395-1405) offenbart ein Verfahren zur Herstellung von $TiO_2/SiO_2$-Mischoxiden enthaltend 0, 3, 5, 7, 15, 40, 60, 80 oder 100 Gew.-% $SiO_2$. Bei 1000°C liegt die $TiO_2$-Phase des Mischoxids SGH2, enthaltend 7 Gew.-% $SiO_2$, überwiegend in der Anatasphase vor (Figur 3c).

Xie C et al. ("Enhanced photocatalytic activity of titania-silica mixed oxide prepared via basic hydrolyzation" Materials Science & Engineering B, 112 (2004) 34-41) offenbart ein Verfahren zur Herstellung von $TiO_2/SiO_2$-Mischoxiden enthaltend 0, 4,7, 9,1, 16,6 oder 50 Gew.-% $SiO_2$. Das Mischoxid $TiO_2$-16.6% $SiO_2$ enthält 16,6 Gew.-% $SiO_2$, wobei 100% des $TiO_2$-Gehalts nach Wärmebehandlung bei 800°C in der Anatasphase vorliegt (Tabelle 1).

Auf dem Gebiet der heterogenen Katalyse werden heute jedoch möglichst phasenreine Katalysatorträger auf Basis von $TiO_2$ gefordert, die hohe Oberflächen aufweisen und weitestgehend frei von störenden Anionen wie $SO_4^{2-}$ oder $Cl^-$ sind, d.h. Gehalte von jeweils kleiner 250 ppm dieser Anionen aufweisen.

Die Alkali-Gehalte, insbesondere Natrium und Kalium, und Erdalkali-Gehalte, insbesondere Calcium und Magnesium, sollen bezogen auf das jeweilige Element jeweils kleiner 50 ppm betragen und die Eisen-Gehalte kleiner 100 ppm sein, damit die Effektivität der katalytisch wirksamen Phase bei Temperaturbelastung des Trägers nicht durch die labilen chemischen Gitterstörungen nachhaltig zerstört wird.

Die vorliegende Erfindung hat sich zur Aufgabe gestellt, ein einfaches Verfahren zur Herstellung von hochreinen temperaturstabilen Katalysatorträgern, enthaltend $TiO_2$ in der Anatas-Phase, unter Einhaltung obiger Grenzwerte zur Verfügung zu stellen.

Insbesondere soll vermieden werden, dass eine komplizierte Vorbehandlung der Ausgangskomponenten oder eine aufwendige Nachbehandlung der $TiO_2/SiO_2$-Mischoxid-Feststoffsuspensionen oder des $TiO_2/SiO_2$-Mischoxids selbst notwendig wird.

Insbesondere folgende charakteristische Merkmale soll das Katalysatorträger-Material aufweisen:

1. hohe Trägeroberflächen unter Beibehaltung der katalytisch wirksamen Anatas-Struktur als Hauptphase,
2. hohes Porenvolumen bei gleichzeitigem Vorliegen der katalytisch wirksamen Anatasstruktur als Hauptphase,
3. hohe Temperaturstabilität des Trägers, um die Phasenumwandlung von der katalytisch aktiven Anatas- in die Rutilphase zu unterbinden und damit die Haltbarkeit/Stabilität des Trägers zu verlängern/zu erhöhen und
4. möglichst geringe chemische Verunreinigungen.

## Zusammenfassung der Erfindung

Zur Lösung dieser Aufgabe wird ein Verfahren gemäß unabhängigen Ansprüchen vorgeschlagen. Bevorzugte Ausführungsformen sind in den Unteransprüchen oder nachfolgend beschrieben.

Überraschenderweise hat sich gezeigt, dass man bei der Verwendung von Titanalkoholaten als Titankomponente und der Verwendung von über Kationenaustauschern gereinigter Kieselsäure, in Form eines Kieselsäuresols, als $SiO_2$-Lieferant, geeignete Katalysatorträger erhält, wobei das Titanalkoholat hydrolysiert wird, vorzugsweise mit über Ionenaustauschern gereinigtem Wasser, und dabei gleichzeitig, teilweise zeitlich überlappend oder nachfolgend, das über Kationenaustauscher gereinigte Kieselsäuresol zugesetzt wird.

Das erfindungsgemäße Verfahren beinhaltet die Umsetzung einer Titanverbindung, aufweisend zumindest eine C1- bis C16- Alkoholatgruppe, in wässrigem Milieu mit einer Kieselsäureverbindung und anschließendem Trocknen bzw. Kalzinieren des erhaltenen Produktes, wobei vorzugsweise mit über Ionenaustauschern gereinigtem Wasser hydrolysiert wird und gleichzeitig, oder anschließend, die über Kationenaustauscher gereinigte Kieselsäure zugesetzt wird.

Das entstehende $TiO_2$/$SiO_2$-Mischoxid enthält 0,5 bis 95 Gew.% $SiO_2$ und zum verbleibenden Rest $TiO_2$, jeweils bezogen auf das vollständig kalzinierte Produkt, wobei bei $SiO_2$-Gehalten von kleiner 60 Gew.% gefunden wurde, dass die Mischoxide frei von der Rutilphase sind und die katalytisch aktive Anatas-Modifikation aufweisen und bei $SiO_2$-Gehalten von größer 90 Gew.% die Mischoxide i.d.R. röntgenamorph vorliegen.

Das Umsetzungsprodukt wird nachfolgend vorzugsweise einer Kalzinierung über zurmindest 30 min (mittlere Verweilzeit) bei über 550°C ausgesetzt. Die Kalzinierung wird durch Aussetzen der Proben einer Temperatur von 550°C bis 1100°C bei einer Verweilzeit von 30 min bis 24 Stunden bewirkt.

Nach dem erfindungsgemäßen Verfahren werden aufgrund des isomorphen Einbaus der nanoskaligen Kieselsäureteilchen (mittlere Partikeldurchmesser 1,8 bis 9,3 nm gemäß Searstitration) Katalysatorträger mit homogener Verteilung des $TiO_2$ und des $SiO_2$ erhalten, deren spezifische Oberflächen in Abhängigkeit vom $SiO_2$-Gehalt von 100 bis zu über 725 m$^2$/g reichen und eine ausgezeichnete Oberflächenstabilität zeigen, wobei sich überraschend herausstellte, dass die Hauptphase der erhaltenen und zur Kalzinierung (3 h/550°C) eingesetzten Mischoxide mit zunehmendem $SiO_2$-Gehalt von Anatas bis amorph (bei 90% $SiO_2$) reichen. Die Rutilphase wird nicht beobachtet.

Die nach dem erfindungsgemäßen Verfahren erhaltenen Träger haben nach Behandlung bei 1100°C und 24 Stunden (Stabilitätstest) in Abhängigkeit vom $SiO_2$-Gehalt eine Oberflächenstabilität von bis zu 240 m$^2$/g (z.B. bei 60% $SiO_2$-Gehalt) und sind damit aufgrund der zu erwartenden Stabilität und daraus resultierenden Standzeiten sehr geeignet, um als Katalysatorträger in z.B. Verbrennungs- oder Abgasreinigungsprozessen eingesetzt zu werden.

Darüber hinaus ist die chemische Reinheit der hier beschriebenen Katalysatorträger von Vorteil wegen der geringen Gehalte an Eisen (insbesondere kleiner 25 ppm), Natrium (insbesondere kleiner 25 ppm), Kalium (insbesondere, kleiner 50 ppm), Calcium (insbesondere kleiner 25 ppm), Magnesium (insbesondere kleiner 25 ppm), Zink (insbesondere kleiner 25 ppm), Nickel (insbesondere kleiner 10 ppm) und eines Gehaltes an Sulfat und an Chlorid von insbesondere jeweils kleiner 200 ppm, und zwar auch bei Trägern mit einem $SiO_2$-Gehalt bis zu 95 Gew.%. Diese Träger weisen nach Kalzinierung, d.h. einer Temperaturbehandlung von über 550°C, eine Gesamtreinheit von über 99,9 Gew.%, bezogen auf das Verhältnis $TiO_2$ und $SiO_2$ zur oxidischen Gesamtmasse, auf. Derartige Katalysatorträger werden als hochrein im Sinne der Erfindung betrachtet.

Bei dem erfindungsgemäßen Verfahren werden die Titanalkoholate, aufweisend zumindest eine Alkoholatgruppe, entweder als Mischalkoholate oder als Einzelalkoholate verwendet, die z.B. aus Titanverbindungen und Alkoholen oder durch Umesterung von kommerziell verfügbarem Titantetra(isoproplylat) herstellbar sind.

Die Titanalkoholate werden entweder mit über Ionenaustauschern gereinigtem Wasser hydrolysiert, wobei gleichzeitig die über Kationenaustauscher gereinigte Kieselsäure dem Hydrolysewasser zugesetzt wird, vorzugsweise in einer Menge von 0,1 bis 8,0 Gew.%, oder es wird das nach der Hydrolyse mit über Ionenaustauschern gereinigtem Wasser erhaltene $TiO_2$/Wasser-Gemisch mit der über Kationenaustauschern gereinigten Kieselsäurelösung in einer Konzentration von 0,1 bis 8,0 Gew.% vermischt. Nach der Hydrolyse erfolgt ggf. eine einstufige oder mehrstufige hydrothermale Alterung bei 90 bis 235°C über zumindest 1 h, wobei jede Stufe der hydrothermalen Alterung im Vergleich mit der vorherigen bei unterschiedlicher Temperatur durchgeführt werden kann.

Ein besonderer Vorteil des erfindungsgemäßen Verfahrens gegenüber üblicherweise durch Fällungsreaktion oder Flammenpyrolyse erhaltenen $TiO_2$-basierten Materialien ist, dass eine optimale strukturchemische Einlagerung der isomorphen $SiO_4$-Bausteine mittels der über Kationenaustausch hergestellten Kieselsäuren in die $TiO_2$/Wasserphase erfolgt. Vorteilhafterweise wird ein Rührreaktor, z.B. gemäß DE-3823895, eingesetzt, wobei die Rührgeschwindigkeit Einfluss auf Kristall- und Porengröße hat. Ebenso kann ein statischer Mischer eingesetzt werden. Die hydrothermale Alterung umfasst eine Temperaturbehandlung bei 70 bis 235°C, insbesondere 90° bis 210°C, und wird vor der Trocknung bzw. Kalzinierung durchgeführt, vorzugsweise unter einem Druck wie er sich im Autoklaven einstellt.

**Detaillierte Diskussion der Erfindung**

Die Analyse der chemischen Verunreinigungen der erfindungsgemäßen Produkte zeigt, dass die folgenden Grenzwerte nicht überschritten werden:

| | | |
|---|---|---|
| Eisen (< 25 ppm), | Natrium (< 25 ppm), | Kalium (< 50 ppm), |
| Calcium (< 25 ppm), | Magnesium (< 25 ppm), | Zink (< 25 ppm), |
| Nickel (< 10 ppm), | Chlorid < 200 ppm und | Sulfat < 200 ppm. |

Derartige Verbindungen werden als hochrein im Sinne der Erfindung bezeichnet.

Gleiches gilt auch für die reinen Titandioxidprodukte (vergleiche Beispiele 1 und 2). Auf eine Bestimmung der Anionen, wie sie durch Einsatz von Mineralsäuren und organischen Säuren in der Hydrolyse zu erwarten sind, wurde verzichtet, da sich diese Anionen nach einer Kalzinierung der Trägersubstanzen bei z.B. 550°C über 3 Stunden zersetzen. Die meisten Anionen führen weder für die Titandioxidprodukte noch für die erfindungsgemäß hergestellten Mischoxide zu schädlichen Gitterstörungen. Anders ist dies für Anionen wie Chlorid und Sulfat, welche Gitterstörungen verursachen.

*Titandioxide aus Titanalkoholaten, Einfluss der Alterung und der Alterungszusätze*

Beispiele 1 und 2 zeigen das Verhalten reinen Titandioxids, welches durch Hydrolyse unterschiedlicher Titanalkoholate in Anwesenheit verschiedenartiger chemischer Hydrolysezusätze gewonnen wurde. Die physikalischen Daten dieser reinen Titandioxide sind im Nachfolgenden mit den erfindungsgemäß hergestellten Mischoxiden verglichen.

Nicht hydrothermal gealterte Titandioxide weisen vergleichsweise niedrige Porenvolumina und Oberflächen auf, z.B. bei Verwendung von Titantetra(2-ethylhexanolat) ein Porenvolumen von 0,11 ml/g und eine Oberfläche von 54 $m^2$/g (siehe Tab. 1). Allerdings erreicht man durch hydrothermale Alterung der vom Reaktionsalkohol befreiten Titandioxidsuspensionen sowohl ein deutlich höheres Porenvolumen (0,34 ml/g) als auch eine höhere Oberfläche (80 $m^2$/g) (siehe Tab. 2). Diese Verbesserungen der physikalischen Eigenschaften werden, unabhängig vom eingesetzten Titanalkoholat, sowohl im neutralen pH (z.B. Wasser), im sauren pH (z.B. in Gegenwart von Leucin oder $HNO_3$) als auch im basischen pH Bereich (z.B. in Gegenwart von $NH_3$ oder $NH_4HCO_3$) erreicht (siehe Beispiel 2). Der hydrothermale Alterungsschritt führt jedoch bei keinem der reinen $TiO_2$-Produkte aus Beispiel 2, die Anatas in der Hauptphase enthalten, zu Porenvolumina größer 0,38 ml/g.

Kristallographisch interessant ist, dass die kristalline Hauptphase der reinen Titandioxide nach Beispiel 1 und 2 meist Anatas ist, ggf. mit leichten Anteilen an Brookit, jedoch mit folgenden Ausnahmen:

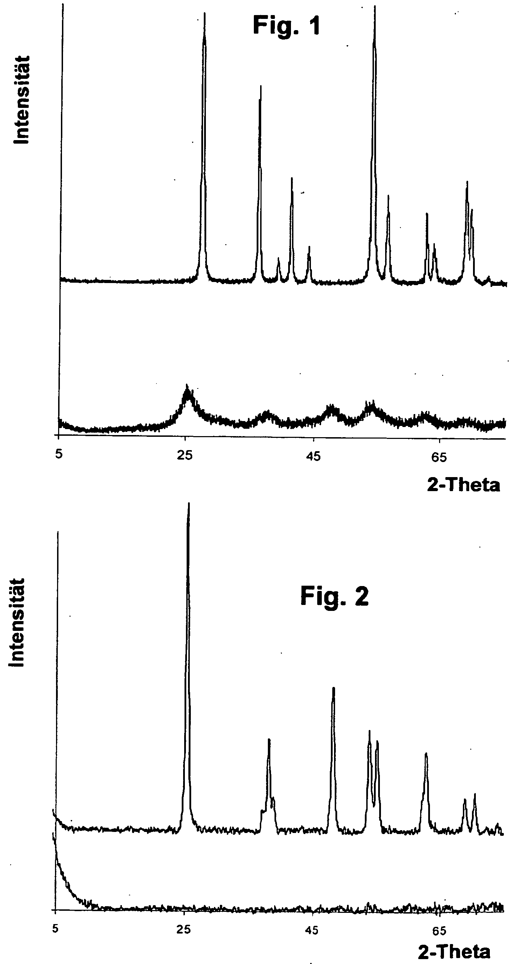

1. enthielt das Hydrolysemedium Oxalsäure, erzielte man ohne Alterung amorphes Anatas, welches sich anschließend bei hydrothermaler Alterung in die Rutilphase umwandelte (vergleiche Fig. 1),
2. enthielt das Hydrolysemedium Ammoniumhydrogencarbonat, erzielte man ohne Alterung amorphes $TiO_2$, welches anschließend durch Kalzinierung bei 550°C in die reine Anatasphase überführt werden konnte (vergleiche Fig. 2).

*Einfluss des $SiO_2$-Anteils eines Mischoxids, hergestellt unter Hydrolyse von Titanalkoholaten und Vergleich von Co-Hydrolyse und Slurrydotierung*

Nach dem erfindungsgemäßen Verfahren wird im Falle der Co-Hydrolyse, in dem das Titanalkoholat in Anwesenheit der Kieselsäure hydrolysiert wird, das Verhältnis von $TiO_2$/$SiO_2$ im Katalysatorträger durch Absenken oder Erhöhen der Mengen an Kieselsäure und entsprechender Anpassung der Einsatzmengen von Alkoholat unter Beibehaltung der Gesamtmenge an Reaktanden eingestellt.

Es zeigt sich, dass sich, verglichen mit dem durch Hydrolyse von Titanalkoholaten hergestellten $TiO_2$, unabhängig vom verwendeten Titanalkoholat die Oberflächenwerte und die Porenvolumina erhöhen, wenn sich der $SiO_2$-Anteil erhöht (siehe Beispiel 3).

Besonders auffällig ist, dass schon mit sehr geringen $SiO_2$-Anteilen, zugefügt in Form der oben wiedergegebenen Kieselsäure (größer 1,4% im Feststoff), Oberflächen von größer 140 $m^2$/g erhalten werden, im Vergleich zum reinen $TiO_2$ mit einer maximalen Oberfläche von 83 $m^2$/g (vergleiche Beispiel 1, Tabelle 1 und Beispiel 3, Tabelle 4).

Betrachtet man den Verlauf der Oberflächenwerte in Abhängigkeit von der Hydrolysetemperatur (25°C bzw. 70°C) und steigenden $SiO_2$-Gehalten, stellt man fest, dass die Werte für 25°C bei einem $SiO_2$-Gehalt von ca. 30% mit

etwa 220 m$^2$/g ein Maximum durchlaufen und dann wieder sinken. Der Oberflächenverlauf bei 70°C steigt viel stärker an, so dass schon bei ca. 20% SiO$_2$ eine Oberfläche von etwa 250 m$^2$/g erreicht wird. Vollkommen unerwartet findet man hier, dass die Oberflächenwerte mit steigendem SiO$_2$-Gehalt stetig weitersteigen, bis bei einem SiO$_2$-Gehalt von ca. 90% eine Oberfläche von etwa 550 m$^2$/g erreicht wird.

Im binären Mischoxidsystem TiO$_2$/SiO$_2$ erwartet man lediglich einen linearen Anstieg dieser Werte, der nicht höher sein sollte, als die Werte der Ausgangskomponenten, jeweils mit deren Anteil, wie z.B. 100% TiO$_2$ (Oberfläche = 83 m$^2$/g; Porenvolumen = 0,22 ml/g) und 100% SiO$_2$ (hergestellt aus Kieselsäure, Oberfläche = 345 m$^2$/g; Porenvolumen = 0,08 ml/g).

Das überraschende Ergebnis ist somit der überproportionale Anstieg der Oberflächenwerte, der im Falle der Verwendung von Titantetra(isopropylat) und einer Hydrolysetemperatur von 70°C (vergleiche Tabelle 4) bei einem TiO$_2$/SiO$_2$-Mischoxidverhältnis von ca. 10/90 (Gew.%/Gew.%) mit etwa 550 m$^2$/g sein Maximum erreicht. Dieser Wert liegt damit um 37 % höher als rechnerisch erwartet (TiO$_2$/SiO$_2$-Mischoxidverhältnis 10/90: (83 (m$^2$/g):10)x1 + (345 (m$^2$/g):10)x9 = 319(m$^2$/g)).

Die zweite überraschende Beobachtung ist der überproportionale Anstieg der Porenvolumina, der im Falle der Verwendung von Titantetra(isopropylat) und einer Hydrolysetemperatur von 70°C (vergleiche Tabelle 4) bei einem TiO$_2$/SiO$_2$-Mischoxidverhältnis von ca. 90/10 mit 0,46 ml/g sein Maximum erreicht. Dieser Wert liegt damit um 120% höher als rechnerisch erwartet (TiO$_2$/SiO$_2$-Mischoxidverhältnis 90/10: (0,22 (ml/g):10)x9 + (0,08 (ml/g):10)x1 = 0,21 (ml/g)).

Die Co-Hydrolyse von Kieselsäure und Titanalkoholaten und die Slurrydotierung (vorab Hydrolyse der Titanalkoholate und nachfolgende Kieselsäure-Zugabe) zeigen, dass sich mit zunehmendem SiO$_2$-Anteil die Oberflächen- und die Porenvoluminawerte überproportional erhöhen. Vergleicht man Co-Hydrolyse (Beispiel 3) und Slurrydotierung (Beispiel 4) findet man im Bereich niedriger SiO$_2$-Gehalte (kleiner 20 Gew.%) ähnliche Werte. Ab SiO$_2$-Gehalten von 20% wird jedoch überraschend gefunden, dass die schon bei der Co-Hydrolyse erzielten, unerwartet hohen Oberflächen- und Porenvoluminawerte nach dem Verfahren der Slurrydotierung sogar noch übertroffen werden. Liegt z.B. das Porenvolumenmaximum bei der Co-Hydrolyse bei SiO$_2$-Gehalten von ca. 10% bei 0,46 ml/g, verschiebt es sich bei der Slurrydotierung zu SiO$_2$-Gehalten von ca. 20% zu einem Porenvolumen von 0,67 ml/g. Damit ist gezeigt, dass die unerwarteten physikalischen Eigenschaften der erfindungsgemäßen Katalysatorträger sowohl bei der Co-Hydrolyse als auch bei der Slurrydotierung auftreten.

Die physikalischen Daten der Mischoxide zeigen, dass sich mit zunehmendem SiO$_2$-Anteil die Oberflächenwerte und die Porenvolumina erhöhen. Überraschend ist dieses Verhalten im wesentlichen unabhängig vom verwendeten Titanalkoholat. Damit ist gezeigt, dass sowohl wassermischbare als auch wasserunmischbare Alkohole als Substituenten der zur Hydrolyse eingesetzten Titanalkoholate eingesetzt werden können. Neben den beiden unterschiedlichen Verfahren zur Herstellung der TiO$_2$/SiO$_2$-Mischoxid-Katalysatoren haben die SiO$_2$-Menge, die Hydrolysetemperatur sowie die Temperatur und Dauer der hydrothermalen Alterung Einfluss auf die Oberflächen und Porenvolumina.

*Kristallstrukturen*

Mit dem Verfahren der Röntgenbeugung kann nachgewiesen werden, dass unabhängig von der verwendeten Verfahrensvariante, Co-Hydrolyse oder Slurrydotierung, sich bei vergleichbaren TiO$_2$/SiO$_2$-Verhältnissen für die Katalysatorträger ähnliche Kristallstrukturen ausbilden. Kristallographisch interessant ist, dass die kristalline Hauptphase der TiO$_2$/SiO$_2$-Mischoxide nach den Beispielen 4 bis 6 meist Anatas ist, ggf. mit leichten Anteilen an Brookit. Überraschend ist allerdings, dass beispielsweise bei 2 Gew.% Ammoniumhydrogencarbonat als Hydrolysewasserzusatz und einem TiO$_2$/SiO$_2$-Verhältnis von etwa 90:10 nach hydrothermaler Alterung bei 5 h/210°C ein TiO$_2$/SiO$_2$-Mischoxid mit TiO$_2$ in der reinen Anatasphase erhalten wird (vgl. Tabelle 8, Fig. 3).

Die Kristallitgrößen der ungealterten Mischoxide betragen i.d.R. zwischen 5 und 12 nm, gemessen am 101-Reflex, und zwischen 5 und 11 nm, gemessen am 200-Reflex.

*Einfluss der Alterung nach Co-Hydrolyse bzw. nach Slurrydotierung*

Ein Vergleich der Produkte nach hydrothermaler Alterung bei Co-Hydrolyse und bei Slurrydotierung zeigt (siehe Tabelle 8), dass bei gleichem SiO$_2$-Gehalt nach dem Verfahren der Co-Hydrolyse tendenziell leicht höhere Oberflächenwerte als nach dem Verfahren der Slurrydotierung erhalten werden. Allerdings erzielt das Slurryverfahren eher etwas höhere Porenvolumina. Somit ergänzen sich beide Verfahren.

*Einfluss der Temperatur der hydrothermalen Alterung*

Der Einfluß der Temperatur während der hydrothermalen Alterung auf die erzielbaren physikalischen Eigenschaften der neuartigen Mischoxide wird deutlich, wenn man sich z.B. bei ca. 20%igen SiO$_2$-haltigen Mischoxiden die

Oberflächenwerte von Materialien nach einer Alterung bei 90°C im Vergleich zu 210°C ansieht. Es fällt auf, dass sich die Oberflächenwerte mit steigender Temperatur verringern (vgl. Tabelle 8).

Im Falle des Co-Hydrolyseverfahrens sinkt der Oberflächenwert von 294 auf 205 $m^2/g$ und bei Verwendung des Slurryverfahren von 282 auf 156 $m^2/g$. Andererseits, vollkommen unerwartet, beobachtet man gleichzeitig bei hohen hydrothermalen Alterungstemperaturen (z.B. 210°C) steigende Porenvolumina. So steigt z.B. bei den ca. 20 Gew.% $SiO_2$-haltigen Mischoxiden, hergestellt nach dem Verfahren der Co-Hydrolyse, das Porenvolumen von 0,44 bei hydrothermaler Alterung bei 90°C auf 1,14 ml/g bei hydrothermaler Alterung bei 210°C. Dies wird - wenn auch weniger ausgeprägt - ebenfalls nach dem Verfahren der Slurrydotierung beobachtet. Hier steigt das Porenvolumen bei 20 Gew.% $SiO_2$-Gehalt von 0,67 auf 0,93 ml/g an. Diese ungewöhnlichen Zusammenhänge gelten somit für Materialien aus beiden Verfahrensvarianten.

Zusammenfassend ist feststellbar, dass wenn nach dem Co-Hydrolyseverfahren die Alterungstemperatur bei der hydrothermalen Alterung auf z.B. über 90°C, insbesondere über 150°C erhöht wird, ein starker Anstieg der Porenvolumia feststellbar ist, und es können $TiO_2/SiO_2$-Mischoxide mit Porenvolumina von über 1,0 ml/g realisiert werden, die gleichzeitig zu größer 95 Gew.% in der Anatasphase vorliegen.

*Einfluss der Rührergeschwindigkeit bei der hydrothermalen Alterung*

Untersucht man bei ansonsten konstanten Alterungsbedingungen den Einfluss des mechanischen Energieeintrags auf die Produkteigenschaften, wobei die Rührerumfangsgeschwindigkeit als Maß für den Energieeintrag angesehen wird, beobachtet man mit zunehmender Rührerumfangsgeschwindigkeit zwar konstant bleibende Oberflächenwerte, aber stetig steigende Porenvolumina (vergleiche Tabelle 9).

*Einfluss der $SiO_2$-Quelle: Vergleich von hydrolysierten Siloxanen mit Kieselsäure*

Kieselsäure wird in wässrig-ethanolischer Phase frei, wenn Kieselsäureester wie Tetraethoxysilan (TEOS) unter Zugabe von Wasser säurekatalysiert hydrolysiert werden. Geschieht dies in Gegenwart von Titanalkoholaten entsteht hierbei ein $SiO_2/TiO_2$-Mischoxid, weil beide Hydrolyseschritte gleichzeitig durchgeführt werden.

Die physikalischen Daten der Mischoxide zeigen die gleichen Zusammenhänge, wie sie schon bei der Diskussion der nach der Co-Hydrolyse erhältlichen Produkte aufgezeigt wurden. Man beobachtet, dass mit steigendem $SiO_2$-Gehalt die Porenvolumina- und Oberflächenwerte zunehmen. Vergleicht man allerdings die Absolutwerte der mittels Hydrolyse von TEOS hergestellten Mischoxide mit Produkten, die nach dem erfindungsgemäßen Verfahren hergestellt wurden, weisen diese überraschend entweder geringe Oberflächenwerte, geringere Porenvolumina oder beides auf.

Für Gehalte von ca. 10 Gew.% $SiO_2$ für ein durch TEOS-Hydrolyse hergestelltes Mischoxid wird beispielsweise ein Porenvolumen von 0,41 ml/g und eine Oberfläche von 213 $m^2/g$ festgestellt, wohingegen mittels durch Ionenaustauscher hergestellter Kieselsäure (siehe Tabelle 4) ein Porenvolumen von 0,46 ml/g und eine Oberfläche von 232 $m^2/g$ erhalten werden.

Noch deutlicher wird der Unterschied zwischen den beiden $SiO_2$-Quellen, wenn man die Ergebnisse der hydrothermalen Alterung bei 210°C bei Hydrolyse von TEOS (siehe Beispiel 8) mit dem erfindungsgemäßen Verfahren (siehe Beispiel 6) vergleicht. Für Gehalte von ca. 10 Gew.% $SiO_2$ im Mischoxid wird nach Tabelle 11 (TEOS) ein Porenvolumen von 0,61 ml/g und eine Oberfläche von 168 $m^2/g$ erhalten, wohingegen nach Tabelle 8 ein Porenvolumen von 0,94 ml/g und eine Oberfläche von 182 $m^2/g$ erhalten wird.

Weiterhin wird vermutet, dass sich der unerlässliche Säurezusatz, um aus z.B. TEOS die Kieselsäure freizusetzen, nachteilig auswirkt.

*Einfluss des Alters der Kieselsäure*

Es sind auch käufliche Kieselsäuren erhältlich. Z.B. weist das Produkt LEVASIL 500 einen pH-Wert von 9,3 und einen Natrium-Gehalt von 420 ppm auf. Die weiteren zuvor geforderten Grenzwerte für Verunreinigungen werden ansonsten eingehalten.

Bei Hydrolyse der Titanalkoholate mit LEVASIL 500 liegen die Werte für die Porenvolumina und die Oberfläche ungealtert und gealtert in vergleichbaren Dimensionen. Erneut werden aber im Vergleich ähnliche Zusammenhänge, wie bereits für Beispiel 8 erörtert, beobachtet und die Vorteile der vorliegenden Erfindung treten bei Hydrolyse der Titanalkoholate mit LEVASIL 500 auch für diese Verfahrensvariante nicht zutage.

*Thermostabilität*

Häufig ist der Katalysatorträger in seiner späteren Verwendung hohen Temperaturen ausgesetzt. Die maximale Temperatur, der ein Katalysatorträger unbeschadet ausgesetzt sein kann, ist je nach Anwendungsfall verschieden.

Für Autoabgaskatalysatoren hat sich ein Verfahren der Messung von sogenannten Thermostabilitäten etabliert. Diese gilt als Maß für die Stabilität der Trägeroberfläche gegenüber Veränderungen und wird durch eine Langzeittemperung ermittelt, bei einer festgesetzten anwendungstypischen Temperatur (z.B. über 3 oder 24 Stunden). Eine übliche Forderung im Autoabgasbereich ist z.B., dass die Katalysatorträgeroberflächen für moderne geregelte Dreiwegekatalysatoren, wie sie in Ottomotoren eingesetzt werden, nach 24 Stunden bei 1100°C eine Restoberfläche von 50 $m^2$/g nicht unterschreiten. Für Katalysatorträger für Dieselmotoren beobachtet man hingegen, dass die relevante Thermostabilität bei sehr viel niedrigeren Temperaturen von Interesse ist (z.B. nach 3 Stunden bei 800°C).

Es wurde gefunden (vergleiche Tabelle 13), dass die Thermostabilität für $SiO_2$-Gehalte ab 5 Gew.% bereits beachtlich ist und Erfordernisse für Katalysatorträger, die bei niedrigeren Betriebstemperaturen eingesetzt werden, erfüllt sind. Mit steigendem $SiO_2$-Gehalt nimmt die beobachtete Thermostabilität weiter zu, so dass bei größer 20 Gew.% $SiO_2$-Gehalt sowohl die Erfordernisse für Katalysatorträger, die bei niedrigeren als auch solche die bei hohen Betriebstemperaturen eingesetzt werden, erfüllt werden.

Vergleicht man die Oberflächenwerte des $TiO_2$/$SiO_2$-Mischoxid-Katalysatorträgers mit der Anforderung aus dem Autoabgasbereich, so ist das wirtschaftliche und technische Potential dieser neuen Träger eklatant.

*Phasenumwandlung*

Im Folgenden wird anhand der Meßwerte aus Tab. 14 gezeigt, dass offensichtlich bei Verwendung der hier beschriebenen Verfahren, die Verschiebung der Phasenumwandlung von Anatas zu Rutil zu höheren Temperaturen durch folgende Maßnahmen bzw. deren Kombination positiv beeinflusst werden kann:

1. durch die Höhe der Menge an zugesetztem $SiO_2$ zum Mischoxid,
2. die Höhe und Dauer der Alterungstemperatur des Mischoxides und
3. durch die Verwendung von chemischen Zusätzen zumindest während der Hydrolyse der Titanalkoholate.

Die Rutilbildungstemperatur $T_{Rutil}$ für ein reines $TiO_2$ (100/0), hergestellt durch die Hydrolyse von Titantetra(isopropylat) bei 70°C in Wasser, liegt bei $T_{Rutil}$ = 680°C (vgl. Tab. 14). Führt man diese Hydrolyse in Anwesenheit von steigenden Mengen an frisch durch Kationenaustausch gewonnener Kieselsäure durch (Co-Hydrolyse), erkennt man, dass die Rutilbildungstemperatur für Mischoxide bei einem $SiO_2$-Gehalt von 11 % auf $T_{Rutil}$ = 1080°C verschoben wird. Diese Verschiebung der Phasenumwandlungstemperatur zu höheren Temperaturen ist außergewöhnlich hoch und entspricht einer Thermostabilisierung der Anatasphase gegenüber der Rutilumwandlung, bezogen auf $TiO_2$, um 400°C. Eine Erhöhung des $SiO_2$-Anteils, z.B. auf 53,8%, bewirkt einen zusätzlichen Anstieg der Rutilbildungstemperatur um weitere 80°C auf $T_{Rutil}$ = 1160°C.

Am Beispiel der $TiO_2$/$SiO_2$-Mischoxide mit dem Mischverhältnis von ca. (90/10) wird aus den Meßwerten der Tab. 14 deutlich, dass der Effekt der Verschiebung der Rutilphasenumwandlungstemperatur zu höheren Temperaturen auch durch eine hydro-thermale Alterung der $TiO_2$/$SiO_2$-Mischoxide z.B. bei 90 oder 210°C erreicht werden kann (Erhöhung der Rutilphasenumwandlungstemperatur um mindestens 380°C).

Das Ausmaß der Verschiebung der Rutilphasenumwandlungstemperatur zu höheren Temperaturen kann von den zur Hydrolyse der Titanalkoholate zugesetzten Chemikalien beeinflusst werden. So zeigen die Meßwerte der Tab. 14, dass die Rutilphasenumwandlungstemperatur sich um 490°C zu höheren Temperaturen verschiebt, wenn das $TiO_2$/$SiO_2$-Mischoxid durch Zugabe des Kieselsols zu einem $NH_4HCO_3$-haltigem $TiO_2$-Slurry und anschließender Alterung bei 4 h/210°C hergestellt wird ($T_{Rutil}$ = 1250°C).

Zur Erläuterung der Erfindung wird Bezug genommen auf die nachfolgenden Figuren:

Fig. 1 zeigt Röntgendiffraktogramme (XRD) von $TiO_2$ aus der Hydrolyse von Titantetra(isopropylat) in der Gegenwart von Oxalsäure. Die ungealterte Probe (vgl. Beispiel 1) ist unten, die hydrothermal gealterte Probe oben (5 h bei 210°C (vgl. Beispiel 2)) wiedergegeben.

Fig. 2 zeigt Röntgendiffraktogramme (XRD) von $TiO_2$ aus der Hydrolyse von Titantetra(hexanolat) in der Gegenwart von Ammoniumhydrogencarbonat. Die nicht kalzinierte Probe (vgl. Beispiel 1) ist unten, die bei 550°C kalzinierte Probe oben wiedergegeben.

Fig. 3 zeigt Röntgendiffraktogramme (XRD) von $TiO_2$/$SiO_2$ (90 Gew.%/10 Gew.%) hergestellt durch Hydrolyse in Gegenwart von 2 Gew.% Ammoniumhydrogencarbonat nach hydrothermaler Alterung 5 h/210°C (vgl. Tabelle 8).

Fig. 4 zeigt Röntgendiffraktogramme (XRD) von $TiO_2$/$SiO_2$ (89 Gew.%/11 Gew.%) bei verschiedenen Temperaturen (Mischoxidherstellung vgl. Tab. 14: Co-Hydrolyse von (TiIP) bei 70°C mit Kieselsäure; 5 h/90°C Alterung).

**Experimentelles**

Analytik

Zur Analyse der erfindungsgemäß hergestellten Verbindungen wurden die Spurenelement-Gehalte mittels Atomemissionsspektroskopie mit induktiv gekoppeltem Plasma bestimmt (AES-ICP, Firma SPECTRO). Die Oberfläche der reinen Oxide bzw. der $TiO_2/SiO_2$-Mischoxide wurde mittels $N_2$-Sorptionsanalytik nach BET ermittelt (DIN 66131, Gerät Autosorb 6, Firma Micromeretics). Das Porenvolumen wurde mittels Stickstoffporosimetrie (DIN 66134, Gerät Autosorb 6, Firma Micromeretics) und/oder mittels Quecksilberpenetration (Intrusionsvolumen) bestimmt (DIN 66133, Porosimeter Autopore IV, Firma Micromeretics, Kontaktwinkel 131 °).

Zum Kalzinieren wurden die erfindungsgemäßen Verbindungen in einem Muffelofen Temperaturen zwischen 550°C und 1100°C ausgesetzt. Zur Hydrolyse wurde deionisiertes Wasser verwendet.

Die Röntgenbeugungsdiagramme wurden mit einem XRD-Gerät der Firma Siemens (Typ D5000) im Winkelbereich von 2 Theta = 2 bis 75° (Schrittweite von 0,035°, Meßdauer 1 s/°) unter Verwendung des Anodenmaterials Cu bei einer Wellenlänge von 1,54051 Å angefertigt.

Die Kristallitgrößenbestimmung erfolgte am (101)- und am (200)-Reflex der Anatasphase mit Hilfe der Scherrer-Formel:

$$\text{Kristallitgröße} = (K \times \text{Lambda} \times 57,3)/(\text{Beta} \times \cos \text{Theta})$$

K (Formfaktor): 0,992; Lambda (Wellenlänge der Röntgenstrahlung): 0,154 nm; Beta (korrigierte apparative Linienverbreiterung): reflexabhängig; Theta: reflexabhängig.

Die Bestimmung der Partikelgrößen der Kieselsäuren im Kieselsäuresol erfolgte durch Searstitration (G. W. Sears, Anal. Chemistry 12, 1956, S. 1982-83).

Zur Messung der Viskositäten wurde ein Viskosimeter DV-II (Meßkörper 1) der Firma Brookfield benutzt.

Die Bestimmung der Phasenumwandlungstemperatur von Anatas zu Rutil wurde mit Hilfe der Röntgendiffraktometrie (XRD) ermittelt. Die XRD-Messungen wurden mit der Hochtemperatur-Diffraktometerkammer HDK S1 (Firma Bühler) unter Luftatmosphäre durchgeführt. Je nach Probe erfolgten die Messungen in einem Temperaturbereich von 500 bis 1250°C. Dabei wurde in einem Schritt mit einer Aufheizrate von 10°C/min bis zum jeweils ersten Messpunkt gefahren und bei stehender Temperatur in einem 2-Theta-Bereich von 21-29° mit einer Schrittweite von 0,02° bei 2 Sekunden Messzeit pro Schritt das Diffraktogramm aufgezeichnet. Dann wurde mit einer Aufheizrate von 10°C/min die Temperatur um 20°C erhöht und wieder das Beugungsdiagramm aufgenommen. Gemessen wurde an einem Theta/Theta-Diffraktometer (Firma Seifert, Ahrensburg) in Reflektionsgeometrie mit parallelisierter Cu-K$\alpha$-Strahlung. Die erzielte Auflösung bei dieser Beugungsgeometrie lag bei rund 0,08° in 2 Theta, gemessen am Standard $Al_2O_3$.

Die Anregungsbedingungen waren 40 kV und 35 mA, als Detektor wurde ein Szintillationszähler verwendet. Vor den eigentlichen Messungen erfolgte die Temperaturkalibrierung durch Aufzeichnung der Phasentransformation von $Ag_2SO_4$ bei 427°C und der Schmelzen von KCl bei 776°C und $K_2SO_4$ bei 1069°C. Die Steuerung des Aufheiz- und des Messregimes erfolgte durch das Programmpaket Rayflex (Firma Seifert X-Ray Diffraction Software).

Die angegebenen Rutil-Phasenumwandlungstemperaturen sind so definiert, dass sie die Temperatur kennzeichnen, bei der röntgenographisch zum ersten Mal eine Intensität im Erwartungsbereich der Rutilphase meßbar wird (Beginn der Rutilphase). Die Auswertung ist in Fig. 4 an einem Fallbeispiel graphisch verdeutlicht. Dort wird die Rutilphasebildung bei 1080°C detektiert.

**Chemikalien**

*Titankomponente (Titanalkoholate)*

Als Titankomponente wurde hochreines kommerziell verfügbares Titantetra(isopropylat) (TiIP) eingesetzt (Bezugsquellen u.a. Synetix, Billingham (UK) oder Nippon Soda, Tokio (Japan)). Die Schmelzpunkte des TiIP lagen zwischen 16,7 und 17,9°C. Die Titangehalte lagen zwischen 16,5 und 17,0 Gew.%. Die chemische Reinheit in Bezug auf die Eisen- und Chloridgehalte betrug 1-2 ppm bzw. 6-18 ppm. Alle anderen Titanalkoholate wurden durch Umsetzung von TiIP mit den entsprechenden Alkoholen (s.u.) hergestellt.

**Siliziumkomponente (Kieselsäuresole)**

Zur Darstellung der Kieselsäuresole wurden die Natriumionen einer Wasserglaslösung durch saure Ionenaustauscher (Kationenaustauscher) gegen Protonen ausgetauscht. Hierzu wurde handelsübliche Natronwasserglaslösung (z.B. mit 28 Gew.% $SiO_2$; von PQ Germany GmbH) auf ca. 3 bis 4 Gew.% $SiO_2$ mit deionisiertem Wasser verdünnt und dann über eine Ionenaustauschersäule gegeben, die zuvor mit einem regenerierten handelsüblichen Kationenaustauscherharz (z.B. Lewatit S 100; Vertrieb durch Firma Bayer oder SYBRON Chemicals Inc., Pittsburgh, USA) gefüllt wurde und vor Beginn des Austauschvorganges mit deionisiertem Wasser gespült wurde, bis die Leitfähigkeit des Eluats bei 25°C kleiner 5 microS/cm war. Der Kationenaustausch vollzieht sich gemäß der Reaktionsgleichung:

$$Na_4SiO_4 + 4\,H^+ \rightarrow H_4SiO_4 + 4\,Na^+$$

Im Eluat fällt ein "frisches" Kieselsäuresol mit einem pH-Wert von ca. 3,5 an. Dieses Kieselsäuresol enthält gemäß Ansatz ca. 3 bis 4% $SiO_2$ und ist natriumarm (Na-Gehalt < 10 ppm). Es wurde für nachgenannte Versuche eingesetzt. Die Regeneration des verbrauchten Kationenaustauscherharzes geschieht nach den Angaben des Herstellers, z.B. durch mehrmaliges Waschen des Harzes mit 10%iger Salzsäurelösung.

Das "frische" Kieselsäuresol wurde durch den Einsatz eines handelsüblichen Kationenaustauschers erhalten. Der Begriff "frische" Kieselsäure versteht sich so, dass das Kieselsäuresol einen niedrigen Oligomerisationsgrad aufweist. Der Oligomerisationsgrad kann anhand der durch die Searstitration (s.o.) bestimmten Teilchengrößen in nm abgeschätzt werden. Die "frische" über Kationenaustausch hergestellte Kieselsäure (pH Wert 3,6) weist gemäß Searstitration eine Teilchengröße von 1,8 nm auf. Die Viskosität dieses Kieselsäuresols liegt unter -10 mPas. Der Oligomerisierungsgrad dieser Kieselsäure nimmt mit der Zeit zu. Dies ist anhand der Searsteilchengröße messbar. So misst man 4 Stunden nach Herstellung der Kieselsäure einen Searsteilchendurchmesser von 2,4 nm. 24 Stunden nach Herstellung werden 2,8 nm gemessen. Die Viskosität liegt 24 Stunden nach Herstellung immer noch unter 10 mPas.

Es wurde gefunden, dass die so hergestellten Kieselsäureteilchen mit nanostrukturellen Dimensionen besonders geeignet in der vorliegenden Umsetzung einsetzbar sind, u.a. weil diese eine überraschend hohe Reaktivität aufweisen.

**Beispiel 1: Titandioxid (Vergleichsversuch, mit und ohne hydrothermale Alterung)**

In einem Rührkesselreaktor wurden durch Hydrolyse der in Tabelle 1 wiedergegebenen Titanalkoholate mit einem Titangehalt zwischen 16,8 und 4,5 Gew.% Feststoffsuspensionen aus reinem $TiO_2$ hergestellt. Die Hydrolysen wurden, z.B. im Falle von Titantetra(isopropylat) (TiIP) (16,8 Gew.% Ti), durch 45 kg TiIP mit 135 kg deionisiertem Wasser bei jeweils unterschiedlichen Temperaturen zwischen 30 und 90°C und über 30 bis 60 Minuten kontinuierlich durchgeführt, teils im Basischen, teils im Neutralen und teils im Sauren, wobei bei der sauren Hydrolyse wässrige Lösungen verschiedener Mineralsäuren oder verschiedener organischer Säuren eingesetzt wurden.

Die erhaltene Feststoffsuspension wurde anschließend von dem bei der Hydrolyse freigesetzten Alkohol durch azeotrope Wasserdampfdestillation befreit und danach in einem Sprühtrockner bei einer Luftaustrittstemperatur von 100 bis 130°C getrocknet. Der Kohlenstoffgehalt der entstehenden Feststoffe lag unter 0,2 Gew.%. Der Feststoffgehalt der so erhaltenen Produkte lag bei 75 bis 85 Gew.%, bestimmt über DTG (Endpunkt 1000°C).

Die eingesetzten Titanalkoholate waren Titantetra(isopropylat) (TiIP mit 16,8 Gew.% Ti), Titantetra(2-ethylhexanolat) (TiEtHex mit 8,5 Gew.% Ti), Titantetra(butanolat) (TiBut mit 8,5 Gew.% Ti), Titantetra(2-ethylbutanolat) (TiEtBut mit 8,5 Gew.% Ti), Titantetra(hexanolat) (TiHex mit 9,5 Gew.% Ti) und Titantetra(2-butyloctanolat) (TiButOct mit 4,5 Gew.% Titan). Das Alkoholat zu Wassermassenverhältnis war überstöchiometrisch (Wasser im Überschuss). Die physikalischen Daten der erhaltenen $TiO_2$ sind in Tabelle 1 wiedergeben.

**Tabelle 1**

Physikalische Daten von TiO$_2$-Katalysatorträgern aus Beispiel 1 (ohne hydrothermale Alterung)

| Alkoholat | Hydrolysemedium | Hydrolysetemperatur [°C] | Oberfläche [m$^2$/g][1] | Porenvolumen [ml/g][2] | Kristallstruktur[3] |
|---|---|---|---|---|---|
| TilP | Wasser | 30 | 60 | 0,16 | Anatas/Brookit |
| TilP | Wasser | 70 | 60 | 0,15 | Anatas/Brookit |
| TilP | NH$_3$ (0,2%) | 70 | 59 | 0,23 | Anatas/Brookit |
| TilP | HNO$_3$ (0,2%) | 70 | 52 | 0,14 | Anatas/Brookit |
| TilP | HCOOH (0,65%) | 70 | 59 | 0,14 | Anatas/Brookit |
| TilP | CH$_3$COOH (0,2%) | 70 | 58 | 0,22 | Anatas/Brookit |
| TilP | Oxalsäure (1,25%) | 70 | 22 | 0,08 | Amorph (Anatas) |
| TilP | Leucin (1,0%) | 70 | 85 | 0,14 | Anatas/Brookit |
| TiEtHex | NH$_3$ (0,2%) | 90 | 54 | 0,11 | Amorph (Anatas/Brookit) |
| TiEtHex | HNO$_3$ (0,2%) | 90 | 46 | 0,10 | Anatas/Brookit |
| TiBut | NH$_3$ (0,2%) | 70 | 33 | 0,26 | Anatas/Brookit |
| TiBut | HNO$_3$ (0,2%) | 70 | 52 | 0,12 | Anatas/Brookit |
| TiEtBut | NH$_3$ (0,2%) | 70 | 38 | 0,07 | Amorph (Anatas/Brookit) |
| TiEtBut | HNO$_3$ (0,2%) | 70 | 54 | 0,10 | Anatas/Brookit |
| TiHex | NH$_4$HCO$_3$ (2%) | 30 | 33 | 0,14 | Amorph |
| TiHex | NH$_3$ (0,2%) | 70 | 23 | 0,19 | Amorph (Anatas/Brookit) |
| TiHex | HNO$_3$ (0,2%) | 70 | 49 | 0,08 | Anatas/Brookit |
| TiButOct | NH$_3$ (0,2%) | 70 | 79 | 0,26 | Anatas/Brookit |
| TiButOct | HNO$_3$ (0,2%) | 70 | 47 | 0,09 | Anatas/Brookit |

**Fußnote:**

Titantetra(isopropylat) (TilP), Titantetra(2-ethylhexanolat) (TiEtHex), Titantetra(butanolat) (TiBut), Titantetra(2-ethylbutanolat) (TiEtBut), Titantetra(hexanolat) (TiHex) und Titantetra(2-butyloctanolat) (TiButOct)

[1] Mehrpunkt BET (N$_2$) [m$^2$/g] (Kalzinierung 3 h/550°C)

[2] Intrusionsporenvolumen (Hg) [ml/g] für Poren im Bereich 0-80 nm Radius (Kalzinierung 3 h/550°C)

[3] Röntgenographische Haupt-/Nebenphase der unkalzinierten Produkte, für amorphe Produkte die geringe Mengen kristallinen Materials aufweisen ist die Kristallphase in Klammern nachgestellt

**Beispiel 2: Titandioxid (Vergleichsversuch mit hydrothermaler Alterung)**

Es wurde analog Beispiel 1 umgesetzt, wobei die erhaltenen $TiO_2$-Feststoffsuspensionen nach der Synthese einer Alterung über unterschiedliche Zeiten und bei unterschiedlicher Temperatur unterzogen wurden, bevor abschließend eine Sprühtrocknung durchgeführt wurde. Die physikalischen Daten der erhaltenen $TiO_2$ sind Bestandteil von Tab. 2.

**Tabelle 2**

Physikalische Daten von $TiO_2$-Katalysatorträgern aus Beispiel 2 (mit hydrothermaler Alterung 5 h/210°C)

| Alkoholat | HydrolyseMedium | Hydrolysetemperatur [°C] | Oberfläche [m²/g][1] | Porenvolumen [ml/g][2] | Kristallstruktur [3] |
|---|---|---|---|---|---|
| TiIP | Wasser | 30 | 88 | 0,30 | Anatas/Brookit |
| TiIP | Wasser | 70 | 78 | 0,38 | Anatas/Brookit |
| TiIP | $NH_3$ (0,2%) | 70 | 85 | 0,30 | Anatas/Brookit |
| TiIP | $HNO_3$ (0,2%) | 70 | 72 | 0,22 | Anatas/Brookit |
| TiIP | HCOOH (2,5%) | 70 | 70 | 0,24 | Anatas/Brookit |
| TiIP | $CH_3COOH$ (3,3%) | 70 | 75 | 0,23 | Anatas/Brookit |
| TiIP | Oxalsäure (1,4%) | 70 | 43 | 0,44 | Rutil |
| TiIP | Leucin (1,0%) | 70 | 87 | 0,24 | Anatas/Brookit |
| TiEtHex | $NH_3$ (0,2%) | 90 | 80 | 0,34 | Anatas/Brookit |
| TiEtHex | $HNO_3$ (0,2%) | 90 | 67 | 0,22 | Anatas/Brookit |
| TiBut | $NH_3$ (0,2%) | 70 | 81 | 0,29 | Anatas/Brookit |
| TiBut | $HNO_3$ (0,2%) | 70 | 89 | 0,26 | Anatas/Brookit |
| TiEtBut | $NH_3$ (0,2%) | 70 | 71 | 0,23 | Anatas/Brookit |
| TiEtBut | $HNO_3$ (0,2%) | 70 | 82 | 0,31 | Anatas/Brookit |
| TiHex | $NH_4HCO_3$ (2%) | 30 | 33 | 0,14 | Amorph |
| TiHex | $NH_3$ (0,2%) | 70 | 72 | 0,25 | Anatas/Brookit |
| TiHex | $HNO_3$ (0,2%) | 70 | 62 | 0,19 | Anatas/Brookit |
| TiButOct | $NH_3$ (0,2%) | 70 | 87 | 0,22 | Anatas/Brookit |
| TiButOct | $HNO_3$ (0,2%) | 70 | 69 | 0,21 | Anatas/Brookit |

**Fußnote:**

Titantetra(isopropylat) (TiIP), Titantetra(2-ethylhexanolat) (TiEtHex), Titantetra(butanolat) (TiBut), Titantetra(2-ethylbutanolat) (TiEtBut), Titantetra(hexanolat) (TiHex) und Titantetra(2-butyloctanolat) (TiButOct)

[1] Mehrpunkt BET ($N_2$) [m²/g] (Kalzinierung 3 h/550°C)

[2] Intrusionsporenvolumen (Hg) [ml/g] für Poren im Bereich 0-80 nm Radius (Kalzinierung 3 h/550°C)

[3] Röntgenographische Haupt-/Nebenphase der unkalzinierten Produkte

**Beispiel 3 TiO$_2$/SiO$_2$: (Co-Hydrolyse mit Kieselsäure ohne hydrothermale Alterung)**

Es wurden z.B. 45 kg Titantetra(isopropylat) mit einem Titangehalt von 16,8 Gew.% mit 135 kg deionisiertem Wasser, welches mit frisch hergestelltem ca. 3%igen Kieselsäuresol versetzt war, bei einer Temperatur zwischen 25 und 70°C kontinuierlich in einem Rührreaktor hydrolysiert. Die Verweilzeit betrug zwischen 30 und 60 Minuten.

**Tabelle 3**

Einsatzmengen für Synthesen gemäß Beispiel 3

| Alkoholatmenge (16,8 Gew.% Ti) [kg] | Wasser [kg] | Kieselsäure (3,0 Gew.%) [kg] | TiO$_2$ [Gew.%] | SiO$_2$ [Gew.%] | Gesamtmenge [kg] |
|---|---|---|---|---|---|
| 45 | 135 | 0 | 100 | 0 | 180 |
| 45 | 128,6 | 6,4 | 98,5 | 1,5 | 180 |
| 45 | 113 | 22 | 95 | 5 | 180 |
| 45 | 88,5 | 46,5 | 90 | 10 | 180 |
| 45 | 30 | 105 | 80 | 20 | 180 |
| 36 | 0 | 144 | 70 | 30 | 180 |
| 17,5 | 0 | 162,5 | 50 | 50 | 180 |
| 12 | 0 | 168 | 40 | 60 | 180 |
| 2,1 | 0 | 177,9 | 10 | 90 | 180 |
| 1 | 0 | 179 | 5 | 95 | 180 |
| 0 | 0 | 180 | 0 | 100 | 180 |

**Tabelle 4**

Physikalische Daten von TiO$_2$/SiO$_2$-Katalysatorträgern gemäß Beispiel 3 (Einfluss der Hydrolysetemperatur im Co-Hydrolyseverfahren)

| Verhältnis TiO$_2$/SiO$_2$ [Gew.%/%] | Hydrolysetemperatur [°C] | Oberfläche [m$^2$/g][1] | Porenvolumen [ml/g][2] | Kristallstruktur [3] |
|---|---|---|---|---|
| 98,6/1,4 | 25 | 143 | 0,25 | Anatas/Brookit |
| 94,0/6,0 | 25 | 177 | 0,31 | Anatas/Brookit |
| 86,6/13,4 | 25 | 168 | 0,19 | Anatas/Brookit |
| 72,8/27,2 | 25 | 222 | 0,19 | Anatas/Brookit/amorphes SiO$_2$ |
| 43,9/56,1 | 25 | 148 | 0,07 | Anatas/Brookit/amorphes SiO$_2$ |
| 100/0 | 70 | 83 | 0,28 | Anatas/Brookit |
| 98,5/1,0 | 70 | 115 | 0,33 | Anatas/Brookit |
| 94,3/5,7 | 70 | 182 | 0,38 | Anatas/Brookit |
| 89,0/11,0 | 70 | 232 | 0,46 | Anatas/Brookit |
| 78,4/21,6 | 70 | 249 | 0,36 | Anatas/amorphes SiO$_2$ |
| 46,2/53,8 | 70 | 350 | 0,22 | amorphes (Anatas/SiO$_2$) |
| 9,6/90,4 | 70 | 549 | 0,14 | amorphes SiO$_2$ |
| 0/100 | 70 | 345 | 0,08 | amorphes SiO$_2$ |

**Fußnote:**
[1] Mehrpunkt BET (N$_2$) [m$^2$/g] (Kalzinierung 3 h/550°C)
[2] Gesamtporenvolumen (Hg) [ml/g] für Poren im Bereich 0-80 nm Radius (Kalzinierung 3h/550°C)
[3] Röntgenographische Haupt-/Nebenphase der unkalzinierten Produkte

Die erhaltene Feststoffsuspension wurde anschließend durch azeotrope Wasserdampfdestillation von dem bei der Hydrolyse freigesetzten Alkohol befreit und nachfolgend in einem Sprühtrockner auf übliche Weise bei einer Luftaustrittstemperatur von 100 bis 130°C getrocknet. Der Kohlenstoffgehalt der entstehenden Feststoffe lag unter 0,2%.

Die Mengenverhältnisse zur Herstellung von Katalysatorträgern mit verschiedenem TiO$_2$/SiO$_2$-Verhältnis gemäß Beispiel 3 sind in Tab. 3 dargestellt. Die physikalischen Daten der erhaltenen Katalysatorträger aus Beispiel 3 sind Bestandteil von Tab. 4.

**Beispiel 4 TiO$_2$/SiO$_2$: (Slurrydotierung mit Kieselsäure und Alterung)**

Es wurde analog Beispiel 3 gearbeitet, wobei jedoch das Titanalkoholat mit einer wässrigen Lösung von Ammoniak (0,2 Gew.%) unter Rühren mit ca. 45 Minuten Verweilzeit in einem Rührkesselreaktor hydrolysiert wurde und anschließend die von den Alkoholen abgetrennte wässrige Titandioxidsuspension mit der für das angestrebte Mischoxidverhältnis entsprechenden Menge an über Kationenaustauscher deionisierter Kieselsäure mit einem SiO$_2$-Gehalt von ca. 3 Gew.% vermischt wurde. Die erhaltene Feststoffsuspension wurde dann über 5 Stunden bei 90°C im geschlossenen System unter Rühren gealtert und anschließend analog Beispiel 3 mit einem Sprühtrockner getrocknet. Die physikalischen Daten der erhaltenen Katalysatorträger sind Bestandteil von Tab. 5.

Auch nach dem Verfahren der Slurrydotierung (Beispiel 4) wurde das Verhältnis von TiO$_2$/SiO$_2$ im Katalysatorträger auf einfache Weise durch entsprechende Erhöhung der Mengen an ca. 3 Gew.%iger Kieselsäure unter Beibehaltung der Einsatzmengen von Alkoholat eingestellt. In diesen Versuchsreihen wurden die in Beispiel 3 angegebenen Grenzen für die chemischen Verunreinigungen eingehalten.

Mit der Festsetzung der Hydrolysetemperatur auf 70°C bei der Durchführung dieser Verfahrensvariante wurde die Beobachtung aus Beispiel 3, dass sich bei höheren Hydrolysetemperaturen auch höhere Werte ergeben, ausgenutzt. Zusätzlich zum Einfluss der erhöhten Hydrolysetemperatur sollte in Beispiel 4 der Einfluss der Verweilzeit (Alterung über 5 Stunden bei 90°C) auf die physikalischen Parameter untersucht werden.

**Tabelle 5**

Physikalische Daten von $TiO_2/SiO_2$-Katalysatorträgern gemäß Beispiel 4 (Einfluss der Alterung 5 h/90°C auf Slurrydotierungsverfahren)

| Verhältnis $TiO_2/SiO_2$ [Gew.%/%] | Hydrolysebedingungen Temperatur [°C] | Zusatz [Gew. %] | Alterung [Zeit/°C] | Oberfläche $[m^2/g]^1$ | Porenvolumen $[ml/g]^{2)}$ | Kristallstruktur [3] |
|---|---|---|---|---|---|---|
| 100/0 | 70 | $NH_3$ (0,2%) | 5 h/90°C | 90 | 0,21 | Anatas/Brookit |
| 99,0/1,0 | 70 | $NH_3$ (0,2%) | 5 h/90°C | 110 | 0,30 | Anatas/Brookit |
| 94,3/5,7 | 70 | $NH_3$ (0,2%) | 5 h/90°C | 181 | 0,36 | Anatas/Brookit |
| 89,1/10,9 | 70 | $NH_3$ (0,2%) | 5 h/90°C | 222 | 0,60 | Anatas/Brookit |
| 79,2120,8 | 70 | $NH_3$ (0,2%) | 5 h/90°C | 282 | 0,67 | Anatas/Brookit |
| 41,9158,1 | 70 | $NH_3$ (0,2%) | 5 h/90°C | 417 | 0,63 | Amorph (Anatas/$SiO_2$) |

**Fußnote**

TilP (Titantetra(isopropylat))

[1] Mehrpunkt BET ($N_2$) $[m^2/g]$ (Kalzinierung 3 h/550°C)

[2] Intrusionsporenvolumen (Hg) [ml/g] für Poren im Bereich 0-80 nm Radius (Kalzinierung 3 h/550°C)

[3] Röntgenographische Haupt-/Nebenphase der unkalzinierten Produkte

**Tabelle 6**

Einsatzmengen für Synthesen gemäß Beispiel 5

| Alkoholatmenge (9,5 Gew.% Ti) [kg] | Wasser [kg] | Kieselsäure (3,0%) [kg] | TiO₂ [Gew.%] | SiO₂ [Gew.%] | Gesamtmenge [kg] |
|---|---|---|---|---|---|
| 45 | 135 | 0 | 100 | 0 | 180 |
| 45 | 132,5 | 2,5 | 99,0 | 1 | 180 |
| 45 | 122,5 | 12,5 | 95,0 | 5 | 180 |
| 45 | 110 | 25 | 90 | 10 | 180 |
| (8,5 Gew.% Ti) [kg] | | | | | 180 |
| 45 | 135 | 0 | 100 | 0 | 180 |
| 45 | 132,9 | 2,1 | 99,0 | 1 | 180 |
| 45 | 123,8 | 11,2 | 95,0 | 5 | 180 |
| 45 | 111 | 24 | 90 | 10 | 180 |

**Beispiel 5 TiO₂/SiO₂: (Co-Hydrolyse verschiedener Titanalkoholate mit Kieselsäure)**

Die Synthesen wurden analog Beispiel 3 durchgeführt, wobei jedoch diesmal verschiedene Titanalkoholate mit "frischer" Kieselsäure umgesetzt wurden. Zu diesen Alkoholaten gehörten unter anderem Titantetra(2-ethylbutanolat) (TiEtBut mit 8,5 Gew.% Ti), Titantetra(hexanolat) (TiHex mit 9,5 Gew.% Ti) und Titantetra(2-ethylhexanolat) (TiEtHex mit 8,5 Gew.% Ti).

Die zur Herstellung der Katalysatorträger mit verschiedenem TiO₂/SiO₂-Verhältnis eingesetzten Mengen sind in Tabelle 6 wiedergegeben. Die physikalischen Daten der erhaltenen Katalysatorträger sind Bestandteil von Tabelle 7.

Beispiel 5 zeigt, dass nach dem erfindungsgemäßen Verfahren für unterschiedliche Titanalkoholate und unterschiedliche Titan-Gehalte (9,5 bzw. 8,5 Gew.%) das Verhältnis von TiO₂/SiO₂ im Katalysatorträger durch Variation der Menge an zugesetztem Kieselsäuresol unter Beibehaltung der Menge der Reaktanten in der Summe eingestellt werden kann. Die Wassermenge ist dabei wie in allen Versuchen überstöchiometrisch.

Da die verwendeten Titanalkoholate durch Umesterung des in Beispiel 3 eingesetzten Titantetra(isopropylates) hergestellt wurden, sind die chemischen Verunreinigungen der aus Beispiel 5 erhaltenen TiO₂/SiO₂-Produkte genauso niedrig wie in Beispiel 3 beschrieben.

**Tabelle 7**

Physikalische Daten von TiO₂/SiO₂-Mischoxid-Katalysatorträgern aus Beispiel 5 (Einsatz verschiedener Titanalkoholate im Co-Hydrolyseverfahren mit frischer Kieselsäure)

| Verhältnis TiO₂/SiO₂ [Gew.%/%] | Alkoholat | Hydrolysebedingungen | | Oberfläche | PorenVolumen | Kristall struktur[3] |
|---|---|---|---|---|---|---|
| | | Temperatur [°C] | Zusatz | [m²/g][1] | [ml/g]² | |
| 99,0/1,0 | TiEtBut | 70 | Wasser | 119 | 0,21 | Anatas/Brookit |
| 94,7/5,3 | TiEtBut | 70 | Wasser | 192 | 0,28 | Anatas/Brookit |
| 89,5/10,5 | TiEtBut | 70 | Wasser | 244 | 0,28 | Anatas/Brookit |
| 94,7/5,3 | TiHex | 70 | Wasser | 202 | 0,36 | Anatas/Brookit |
| 89,7/10,3 | TiHex | 70 | Wasser | 238 | 0,37 | Anatas/Brookit |
| 98,9/1,1 | TiEtHex | 70 | Wasser | 122 | 0,21 | Anatas/Brookit |
| 94,6/5,4 | TiEtHex | 70 | Wasser | 201 | 0,28 | Anatas/Brookit |
| 89,3/10,7 | TiEtHex | 70 | Wasser | 247 | 0,28 | Anatas/Brookit |
| 90,2/9,8 | TiEtHex | 90 | Wasser | 250 | 0,32 | Anatas/Brookit |

**Fußnote** 1) Mehrpunkt BET (N₂) [m²/g] (Kalzinierung 3 h/550°C) 2) Intrusionsporenvolumen (Hg) [ml/g] für Poren im Bereich 0-80 nm Radius (Kalzinierung 3 h/550°C) 3) Röntgenographische Haupt-/Nebenphase der unkalzinierten Produkte

Die Röntgenbeugungsanalyse an den $TiO_2/SiO_2$-Mischoxiden zeigt, dass in allen Katalysatorträgern aus Beispiel 5 die Anatasphase vorliegt und die Materialien frei von einer Rutilphase sind.

**Tabelle 8**

Physikalische Daten von $TiO_2$/$SiO_2$-Mischoxid-Katalysatorträgern aus Beispiel 6 (Einfluss von Alterungtemperatur (90°C bzw. 210°C) und Dauer auf Co-Hydrolyse und Slurryverfahren)

| Verhältnis $TiO_2$/$SiO_2$ [Gew.%/%] | Alkoholat | Hydrolysebedingungen Temperatur [°C]/Zusatr/pH[4] | Alterung [Zeitl/°C] | Oberfläche [$m^2$/g][1] | Porenvolumen [ml/g][2] | Poren-radius [nm][3] | Kristallstruktur[5] |
|---|---|---|---|---|---|---|---|
| **a) Co-Hydrolyse** | | | | | | | |
| 94,3/5,7 | TilP | 70/Kieselsol/3,8 | 5 h/90 | 194 | 0,35 | 5,5 | Anatas/Brookit |
| 89,0/11,0 | TilP | 70/Kieselsol/3,6 | 5 h/90 | 247 | 0,52 | 4,9 | Anatas/Brookit |
| 82,2/17,8 | TilP | 70/Kieselsol/3,3 | 5 h/90 | 294 | 0,44 | 4,7 | Anatas/Brookit |
| 9,6/90,4 | TilP | 70/Kieselsol/2,9 | 5 h/90 | 724 | 0,11 | 2,8 | Amorph ($SiO_2$) |
| 94,6/5,4 | TilP | 70/Kieselsol/3,8 | 4 h/210 | 180 | 0,51 | 7,4 | Anatas/Brookit |
| 89,0/11,0 | TilP | 70/Kieselsol/3,6 | 4 h/210 | 182 | 0,94 | 11,4 | Anatas/Brookit |
| 79,3/20,7 | TilP | 70/Kieselsol/3,3 | 4 h/210 | 205 | 1,14 | 11,4 | Anatas/Brookit |
| 9,6/90,4 | TilP | 70/Kieselsol/2,9 | 5 h/210 | 326 | 1,18 | 4,7 | Amorph ($SiO_2$) |
| **b) Slurrydotierung** | | | | | | | |
| 89,3/10,7 | TiHex | 30/$NH_4HCO_3$(2%)/6,7 | 5 h/90 | 205 | 0,20 | 3,2 | Amorph (Anatas) |
| 89,4/10,6 | TiHex | 30/$NH_4HCO_3$(2%)/6,7 | 5 h/210 | 150 | 0,52 | 5,6 | Ananas |
| 95,5/4,5 | TilP | 70/$NH_3$ (0,2%)/8,5 | 5 h/90 | 179 | 0,39 | 6,3 | Anatas/Brookit |
| 89,1/10,9 | TilP | 70/$NH_3$ (0,2%)/8,5 | 5 h/90 | 222 | 0,60 | 8,2 | Anatas/Brookit |
| 79,2/20,8 | TilP | 70/$NH_3$ (0,2%)/8,5 | 5 h/90 | 282 | 0,67 | 8,1 | Anatas(amorph) |
| 95,5/4,5 | TilP | 70/$NH_3$ (0,2%)/8,5 | 4 h/210 | 112 | 0,38 | 7,5 | Anatas/Brookit |
| 89,4/10,6 | TilP | 70/$NH_3$ (0,2%)/8,5 | 5 h/210 | 167 | 0,49 | 5,5 | Anatas/Brookit |
| 82,4/17,6 | TilP | 70/$NH_3$ (0,2%)/8,5 | 4 h/210 | 156 | 0,93 | 14,8 | Anatas/Brookit |
| 89,9/10,1 | TilP | 70/$HNO_3$ (0,2%)/2,1 | 5 h/90 | 213 | 0,26 | 3,7 | Anatas/Brookit |
| 90,2/9,8 | TilP | 70/Leucin (1,0%) und $NH_3$(0,2%)/6,0 | 5 h/90 | 218 | 0,44 | 4,2 | Anatas/Brookit |
| 89,3/10,7 | TilP | 70/$HNO_3$(0,2%)/2,1 | 5 h/210 | 180 | 0,56 | 7,2 | Anatas/Brookit |
| 90,8/9,2 | TilP | 70/Leucin (1,0%) und $NH_3$ (0,2%)/6,0 | 4 h/210 | 189 | 0,55 | 6,6 | Anatas/Brookit |

**Fußnote:**

[1] Mehrpunkt BET ($N_2$) [$m^2$/g] (Kalzinierung 3 h/550°C)

[2] Intrusionsporenvolumen (Hg) [ml/g] für Poren im Bereich 0-80 nm Radius (Kalzinierung 3 h/550°C)

[3] Durchschnittlicher Poren-Radius berechnet aus Intrusionsvolumen (2V/A) für Poren im Bereich 0-80 nm

[4] pH Werte bestimmt nach Hydrolyse

[5] Röntgenographische Haupt-/Nebenphase der unkalzinierten Produkte

**Beispiel 6 TiO$_2$/SiO$_2$: (Einfluss der Alterung auf Co-Hydrolyse- und Slurryverfahren)**

Analog Beispiel 3 bzw. Beispiel 4 wurden Feststoffsuspensionen hergestellt, die mit steigenden Mengen an Kieselsäure dotiert wurden, wobei diese Feststoffsuspensionen nach der Abtrennung der Alkohole bei Alterungstemperaturen von 90°C und 210°C für die Dauer von 4 Stunden und mehr thermisch nachbehandelt wurden. Die Trocknung erfolgte wie in Beispiel 3. Die physikalischen Daten sind in Tabelle 8 dargestellt.

**Beispiel 7 TiO$_2$/SiO$_2$: (Variation der Rührerumfangsgeschwindigkeit)**

Es wurden analog Beispiel 5 unter Verwendung von Titantetra(2-ethylhexanolat) durch Co-Hydrolyse Feststoffsuspensionen hergestellt, die analog Beispiel 6 thermisch bei 210°C nachbehandelt wurden. Während der Alterungsversuche wurde die Rührerumfangsgeschwindigkeit variiert. Die erhaltene Feststoffsuspension wurde analog Beispiel 3 mit einem Sprühtrockner getrocknet. Die physikalischen Daten der erhaltenen Katalysatorträger sind Bestandteil von Tabelle 9.

**Tabelle 9**

Physikalische Daten von $TiO_2/SiO_2$ Katalysatorträgern gemäß Beispiel 7 (Einfluss der Rührerumfangsgeschwindigkeit [m/s]* bei Alterung von Feststoffsuspensionen aus Co-Hydrolyse)

| Verhältnis TiO$_2$/SiO$_2$ [Gew.%/%] | Alkoholat | Hydrolysebedingungen Temperatur [°C]/Zusatz | Rührerumfangsgeschwindigkeit *[m/s]* | Oberfläche [m$^2$/g][1] | Porenvolumen [ml/g][2] | Kristallstruktur [3] |
|---|---|---|---|---|---|---|
| 100/0 | TiEtHex | 90/NH$_3$ (0,2%) | 0 | 82 | 0,30 | Anatas/Brookit |
| 100/0 | TiEtHex | 90/NH$_3$ (0,2%) | 1,04 | 80 | 0,34 | Anatas/Brookit |
| 100/0 | TiEtHex | 90/NH$_3$ (0,2%) | 2,61 | 81 | 0,44 | Anatas/Brookit |
| 90,2/9,8 | TiEtHex | 90/NH$_3$ (0,2%) | 0 | 211 | 0,55 | Anatas/Brookit |
| 90,2/9,8 | TiEtHex | 90/NH$_3$ (0,2%) | 1,04 | 210 | 0,56 | Anatas/Brookit |
| 90,2/9,8 | TiEtHex | 90/NH$_3$ (0,2%) | 2,61 | 205 | 0,68 | Anatas/Brookit |

**Fußnote**

[*] Rührerumfangsgeschwindigkeit= V (m/s)= $D_R$ (m)* 3,14 x N(U/min) x 1/60 (1/s); Durchmesser Rührer = $D_R$ ; Drehzahl = N; TiEtHex (Titantetra(2-ethylhexanolat))

[1] Mehrpunkt BET ($N_2$) [m$^2$/g] (Kalzinierung 3 h/550°C)

[2] Intrusionsporenvolumen (Hg) [ml/g] für Poren im Bereich 0-80 nm Radius (Kalzinierung 3 h/550°C)

[3] RöntgenographischeHaupt-/Nebenphase der unkalzinierten Produkte

**Beispiel 8 TiO$_2$/SiO$_2$: (Kieselsäureester TEOS ohne und mit Alterung, Vergleichsbeispiele)**

Zuerst wurde der Kieselsäureester Tetraethoxysilan (TEOS) (27,2 Gew.% SiO$_2$) in einer Batchreaktion unter Zugabe von 1,0 Gew.%iger Salpetersäure hydrolysiert. Dazu wurde das TEOS in einem Rührreaktor vorgelegt und zum Sieden gebracht. In der Siedehitze und unter Rückflußkühlung wurde die Hydrolyse durch Zugabe der wässrigen Salpetersäure erzielt. Die Reaktion war beendet, wenn nach anfänglicher Trübung die Lösung klar wurde.

**Tabelle 10**

Einsatzmengen für Synthesen gemäß Beispiel 8

| TEOS mit 27,2 Gew.% SiO$_2$ | HNO$_3$ (1 Gew.%) | Alkoholat (16,8 Gew.% Ti) | Wassermenge | TiO$_2$ | SiO$_2$ | Gesamtmenge |
|---|---|---|---|---|---|---|
| [kg] | [kg] | [kg] | [kg] | [Gew.%] | [Gew.%] | [kg] |
| 0,7 | 0,14 | 44,6 | 133,9 | 98,5 | 1,5 | 179,3 |
| 2,4 | 0,48 | 44,3 | 132,8 | 95 | 5 | 180,0 |
| 5,0 | 1,0 | 43,7 | 131,0 | 90 | 10 | 180,7 |

Anschließend wurde bei einer Temperatur von 70°C die Hydrolyse des Titantetra(isopropylates) durch gleichzeitiges Zugeben der klaren, vollständig hydrolysierten, wässrigen TEOS-Lösung und des Alkoholates im Rührkesselreaktor durchgeführt. Die Hydrolysedauer betrug 45 Minuten. Die Aufarbeitung der Feststoffsuspension wurde analog Beispiel 3 vorgenommen. Die azeotrope Wasserdampfdestillation diente dem Entfernen des Ethanol- und Isopropanolgemisches. Der Sprühtrockner wurde auf übliche Weise bei einer Luftaustrittstemperatur von 100 bis 130°C betrieben.
Dieser Versuch wurde in zwei Varianten durchgeführt: ohne Alterung der vom Alkohol befreiten Feststoffsuspension und mit Alterung für 5 h bei 210°C. Die Mengenverhältnisse zur Herstellung der Katalysatorträger mit verschiedenem TiO$_2$/SiO$_2$-Verhältnis gemäß Beispiel 8 sind in Tabelle 10 aufgeführt. Die physikalischen Daten sind in Tabelle 11 dargestellt. Außerdem enthält die Tabelle als Referenzproben die physikalischen Daten der Katalysatorträger, basierend auf der wässrigen salpetersauren Hydrolyse von Titantetra(isopropylat), bei 70°C entnommen, aus Tabelle 1 und 2.

**Tabelle 11**

Physikalische Daten von TiO$_2$/SiO$_2$-Mischoxid-Katalysatorträgern aus Beispiel 8 (Co-Hydrolyse mit salpetersaurer Vorlage aus TEOS bei 70°C a) TEOS ohne thermische Alterung; b) TEOS mit thermischer Alterung (5 h/210°C)[#])

**a) TEOS ohne thermische Alterung**

| TiO$_2$/SiO$_2$ [Gew.%/%] | Alkoholat | Oberfläche [m$^2$/g] [1] | Porenvolumen [ml/g][2] | Kristallstruktur[3] |
|---|---|---|---|---|
| 100/0[*] | TiIP | 52 | 0,14 | Anatas/Brookit |
| 98,75/1,25 | TiIP | 141 | 0,29 | Anatas/Brookit |
| 94,7/5,3 | TiIP | 199 | 0,37 | Anatas/Brookit |
| 89,4/10,6 | TiIP | 218 | 0,45 | Anatas/Brookit |

**b) TEOS mit thermischer Alterung (5 h/210°C)[#]**

| TiO$_2$/SiO$_2$ [Gew.%/%] | Alkoholat | Oberfläche [m$^2$/g] [1] | Porenvolumen [ml/g][2] | Kristallstruktur[3] |
|---|---|---|---|---|
| 100/0[*] | TiIP | 72 | 0,22 | Anatas/Brookit |
| 89,5/10,5 | TiIP | 168 | 0,61 | Anatas |

**Fußnote:**

* Referenzprobe wurde in 0,2 Gew.% HNO$_3$ hydrolysiert
# Rührerdrehzahl betrug 400 U/min
TEOS (Tetraethoxysilan)
TiIP (Titantetra(isopropylat))
[1] Mehrpunkt BET (N$_2$) [m$^2$/g] (Kalzinierung 3 h/550°C)
[2] Intrusionsporenvolumen (Hg) [ml/g] für Poren im Bereich 0-80 nm Radius (Kalzinierung 3 h/550°C)
[3] Röntgenographische Haupt-/Nebenphase der unkalzinierten Produkte

**Beispiel 9 TiO$_2$/SiO$_2$: (Slurrydotierung mit Levasil, Vergleichsbeispiele)**

Beispiel 4 wurde wiederholt, aber unter Verwendung von einer durch Kationenaustausch hergestellten, käuflich erworbenen, Kieselsäure (Typ LEVASIL 500; Fa. H.C. Starck, Goslar), die eine Teilchengröße nach Sears von 9,3 nm hatte. Der Feststoffgehalt betrug 15%. Der pH-Wert dieser Kieselsäure betrug 9,3. Dieser Versuch wurde in zwei Varianten durchgeführt: mit Alterung für 5 h bei 90°C und mit Alterung für 5 h bei 210°C der von Alkohol befreiten Feststoffsuspension. Die physikalischen Daten der erhaltenen Katalysatorträger sind Bestandteil von Tabelle 12.

**Tabelle 12**

Physikalische Daten von TiO$_2$/SiO$_2$-Katalysatorträgern gemäß Beispiel 9 (Slurry aus Hydrolyse von (TiIP) in NH$_3$ (0,2%) bei 70°C dotiert mit LEVASIL; ohne und mit thermischer Alterung)

| Verhältnis TiO$_2$/SiO$_2$ [Gew.%/%] | Alkoholat | Hydrolysebedingungen Temperatur [°C]/Zusatz) | Alterung [Zeit/°C] | Oberfläche [m$^2$/g][1] | Porenvolumen [ml/g][2] | Kristallstruktur[3] |
|---|---|---|---|---|---|---|
| 88,3/11,7 | TiIP | 70/NH$_3$ (0,2%) | 5 h/90 | 196 | 0,26 | Anatas/Brookit |
| 88,3/11,7 | TiIP | 70/NH$_3$ (0,2%) | 5 h/210 | 162 | 0,65 | Anatas/Brookit |

**Fußnote:**

TiIP (Titantetra(isopropylat))

[1] Mehrpunkt BET (N$_2$) [m$^2$/g] (Kalzinierung 3 h/550°C)

[2] Intrusionsporenvolumen (Hg) [ml/g] für Poren im Bereich 0-80 nm Radius (Kalzinierung 3 h/550°C)

[3] Röntgenographische Haupt-/Nebenphase der unkalzinierten Produkte

**Beispiel 10 TiO$_2$/SiO$_2$: (Thermostabilitätsuntersuchungen der Katalysatorträger)**

Ausgewählte Katalysatorträger aus Beispiel 4 (vergleiche Tabelle 5) wurden, nachdem sie 3 h lang bei 550°C im Labormuffelofen kalziniert worden waren, einer weiteren stationären Temperaturbehandlung über mehrere Stunden bei 800 bzw. 1100°C unterzogen. Die physikalischen Daten der Thermostabilitätsmessreihen dieser verschieden hergestellten Katalysatorträger sind Bestandteil von Tabelle 13.

**Tabelle 13**

Thermostabilitätsbestimmung gemäß Beispiel 10 von TiO$_2$/SiO$_2$-Mischoxid-Katalysatorträgern hergestellt nach Beispiel 4

| TiO$_2$/SiO$_2$ [Gew. %/%] | Kalzinierung [Zeit/°C] | Oberfläche[1] [m$^2$/g] | Porenvolumen[2] [ml/g] |
|---|---|---|---|
| 94,3/5,7 | 3 h/550 | 181 | 0,39 |
| | 3 h/800 | 117 | 0,31 |
| | 24 h/1100 | 0,6 | 0,01 |
| 89,1/10,9 | 3 h/550 | 222 | 0,59 |
| | 3 h/800 | 151 | 0,43 |
| | 24 h/1100 | 4,0 | 0,02 |
| 79,2/20,8 | 3 h/550 | 282 | 0,53 |
| | 3 h/800 | 200 | 0,49 |
| | 24 h/1100 | 168 | 0,42 |
| 41,9/58,1 | 3 h/550 | 417 | 0,65 |
| | 3 h/800 | 361 | 0,62 |
| | 24 h11100 | 239 | 0,63 |

**Fußnote:**
[1] Mehrpunkt BET (N$_2$) [m2/g]
[2] Intrusionsporenvolumen (Hg) für Poren im Bereich 0-80 nm Radius

**Beispiel 11 TiO$_2$/SiO$_2$: (Einfluß des SiO$_2$-Gehaltes auf Rutilphasenbildung)**

Es wurden TiO$_2$- bzw. TiO$_2$/SiO$_2$-Mischoxid-Katalysatorträger, wie sie nach den Beispielen 1 bis 9 nach der Sprühtrocknung erhalten wurden, ausgewählt und einer thermogravimetrischen Analyse unterzogen. Das Ziel dieser Untersuchung war es, den Einfluss der verschiedenen Verfahrensvarianten, des SiO$_2$-Gehaltes und der SiO$_2$-Quelle, auf die Phasenbildungstemperatur des Rutil zu untersuchen.

Die gemessenen Peakmaximumtemperaturen für die Rutilbildung, wie sie aus der DTA/TG ersichtlich sind, sind Bestandteil von Tabelle 14. Durch Röntgenpulverdiffraktogramme wurde die Rutilphase bei den angegebenen Temperaturen bestätigt.

**Tabelle 14**

Physikalische Daten von TiO$_2$/SiO$_2$-Katalysatorträgern gemäß der Beispiele 1, 3 und 6 Einfluss des SiO$_2$-Gehaltes und der Alterung auf die Phasenumwandlung von Anatas zu Rutil nach Röntgenbeugungsmessungen.

| Verhältnis TiO$_2$/SiO$_2$ [Gew.%/%] | Rutilphasenbildungstemperatur [°C] | Mischoxid-Synthesebedingung |
|---|---|---|
| 100/0 | 680 | (TiIP)-Hydrolyse bei 70°C; mit NH$_3$ (0,2 Gew.%); 5 h/90°C Alterung |
| 100/0 | 760 | (TiIP)-Hydrolyse bei 70°C; mit NH$_3$ (0,2 Gew.%); 4 h/210°C Alterung |
| 89,0/11,0 | 1080 | Co-Hydrolyse von (TiIP) bei 70°C mit Kieselsäure; 5 h/90°C Alterung |
| 89,0/11,0 | 1140 | Co-Hydrolyse von (TiIP) bei 70°C mit Kieselsäure; 4 h/210°C Alterung |
| 82,2/17,8 | 1150 | Co-Hydrolyse von (TiIP) bei 70°C mit Kieselsäure; 5 h/90°C Alterung |

(fortgesetzt)

Physikalische Daten von $TiO_2/SiO_2$-Katalysatorträgern gemäß der Beispiele 1, 3 und 6 Einfluss des $SiO_2$-Gehaltes und der Alterung auf die Phasenumwandlung von Anatas zu Rutil nach Röntgenbeugungsmessungen.

| Verhältnis $TiO_2/SiO_2$ [Gew.%/%] | Rutilphasenbildungstemperatur [°C] | Mischoxid-Synthesebedingung |
|---|---|---|
| 79,3/20,7 | 1160 | Co-Hydrolyse von (TiIP) bei 70°C mit Kieselsäure; 4 h/210°C Alterung |
| 46,2/53,8 | 1180 | Co-Hydrolyse von (TiIP) bei 70°C mit Kieselsäure; ohne Alterung |
| 9,6/90,4 | 1160 | Co-Hydrolyse von (TiIP) bei 70°C mit Kieselsäure; ohne Alterung |
| 89,3/10,7 | 1080 | Hydrolyse von (TiHex) bei 30°C in $NH_4HCO_3$(2 Gew.%); 5 h/90°C Alterung |
| 89,4/10,6 | 1250 | Hydrolyse von (TiHex) bei 30°C in $NH_4HCO_3$(2 Gew.%); 4 h/210°C Alterung |

**Patentansprüche**

1. Verfahren zur Herstellung von $TiO_2/SiO_2$-Mischoxiden bzw. deren Hydraten und/oder Oxidhydraten, enthaltend 0,5 bis 95 Gew.% Si, bezogen auf die Summe an Ti und Si und berechnet jeweils als $SiO_2$ und $TiO_2$, durch Zusammenbringen einer Titanverbindung bzw. deren Hydrolyseprodukt mit einer Kieselsäureverbindung in einem wässrigen Milieu, wobei

   - die Titanverbindung ein Titanalkoholat ist oder umfasst, aufweisend zumindest eine C1- bis C6-Alkoholaltgruppe,
   - das Verfahren die Hydrolyse der Titanverbindung umfasst, wobei die Hydrolyse der Titanverbindung in Gegenwart oder Abwesenheit der Kieselsäureverbindung erfolgt, und
   - die Kieselsäureverbindung über Kationenaustauscher hergestellt ist, die Kieselsäureverbindung ein wässriges Kieselsäuresol ist, das Kieselsäure umfasst, und die Kieselsäureverbindung einen mittleren Partikeldurchmesser bestimmt durch Titration nach Sears von 1,8 bis 6 nm aufweist.

2. Verfahren gemäß Anspruch 1, **dadurch gekennzeichnet, dass** das Verfahren weiterhin das Trocknen des erhaltenen Produktes und/oder das Kalzinieren bei größer 350°C, insbesondere über 550°C, über zumindest 30 min umfasst.

3. Verfahren gemäß einem der vorhergehenden Ansprüche, **dadurch gekennzeichnet, dass** die Hydrolyse der Titanverbindung bei 25 bis 100°C erfolgt, wobei wenn die Hydrolyse in Gegenwart von Ammoniumhydrogencarbonat oder Aminosäuren durchgeführt wird, Hydrolysetemperaturen von 25 bis 35°C bevorzugt sind und in deren Abwesenheit Hydrolysetemperaturen von 70 bis 100°C bevorzugt sind,

4. Verfahren gemäß einem der vorhergehenden Ansprüche, **dadurch gekennzeichnet, dass** das Kieselsäuresol 1,0 bis 8,0 Gew.%, vorzugsweise 2,0 bis 5,0 Gew.%, Kieselsäure berechnet jeweils als $SiO_2$, umfasst.

5. Verfahren gemäß einem der vorhergehenden Ansprüche, **dadurch gekennzeichnet, dass** das Verfahren weiterhin das Entfernen überschüssigen Alkohols durch azeotrope Wasserdampfdestillation umfasst, wobei das Entfernen nach dem Schritt der Hydrolyse der Titanverbindung oder nach der Zugabe der Kieselsäureverbindung erfolgt, vorzugsweise nach der Zugabe der Kieselsäureverbindung.

6. Verfahren gemäß einem der vorhergehenden Ansprüche, **dadurch gekennzeichnet, dass** vor, während oder nach der Zugabe der Kieselsäureverbindung, vorzugsweise nach Zugabe der Kieselsäureverbindung, eine hydrothermale Alterung bei Temperaturen von 90 bis 235°C, vorzugsweise 150 bis 210°C, über zumindest 1 Stunde, vorzugsweise 4 h bis 24 h, erfolgt und unabhängig hiervon, insbesondere bei dem sich unter diesen Temperaturen ausbildendem Druck in einem geschlossenem Gefäß, und die hydrothermale Alterung ggf. auch in Form von mehreren Behandlungsschritten bei unterschiedlichen Temperaturen und Drücken erfolgt.

7. Verfahren gemäß einem der vorhergehenden Ansprüche, **dadurch gekennzeichnet, dass** die Hydrolyse und/oder die hydrothermale Alterung in Gegenwart von Zusätzen erfolgt, ausgewählt aus der Gruppe umfassend Ammoniak, Ammoniumhydrogencarbonat, Aminosäuren und Mono-, Di- und Tri-Carbonsäuren, oder deren Mischungen, insbesondere der Mischungen umfassend

- Ammoniak und Aminosäuren,
- Ammoniak einerseits und Mono-, Di- und/oder Tri-Carbonsäuren andererseits, und
- Aminosäuren einerseits und Mono-, Di- und/oder Tri-Carbonsäuren andererseits, wobei die Mono-, Di- und/oder Tri-Carbonsäuren ggf. weiterhin substituiert ist mit mindestens einer Hydroxy- oder Carboxyl- oder Oxo- und/oder Aminogruppe.

8. Verfahren gemäß Anspruch 7, **dadurch gekennzeichnet, dass** die Zusätze zu 0,1 bis 8,0 Gew.%, bevorzugt 0,2 bis 2,5 Gew.%, eingesetzt werden.

9. Verfahren gemäß einem der vorhergehenden Ansprüche, dadurch gekennzeichet, dass die Hydrolyse und/oder die hydrothermale Alterung bei einem pH Wert des resultierenden wäßrigen Slurries von kleiner pH = 10,0, bevorzugt kleiner pH = 7,0, erfolgt.

10. Verfahren gemäß einem der vorhergehenden Ansprüche, **dadurch gekennzeichnet, dass** das erhaltene Mischoxidprodukt durch Sprühtrocknung getrocknet wird.

11. Verfahren gemäß einem der vorhergehenden Ansprüche, **dadurch gekennzeichnet, dass** das $TiO_2/SiO_2$-Mischoxid bzw. deren Hydrate und/oder Oxidhydrate größer 5 und kleiner 40 Gew.% Si, insbesondere kleiner 25 Gew.% Si, enthält, bezogen auf die Summe an Ti und Si und berechnet jeweils als $SiO_2$ und $TiO_2$.

12. Verfahren gemäß einem der vorhergehenden Ansprüche, **dadurch gekennzeichnet, dass** die Titanverbindung in Gegenwart der Kieselsäureverbindung hydrolysiert wird.

13. Verfahren gemäß einem der Ansprüche 1 bis 11, **dadurch gekennzeichnet, dass** zunächst die Titanverbindung hydrolysiert wird, ggf. die Alkohol-Verbindungen entfernt werden, und nachfolgend die Kieselsäureverbindung zugegeben wird.

14. Verfahren gemäß einem der vorhergehenden Ansprüche, **dadurch gekennzeichnet, dass** die Kieselsäureverbindung in wässriger Lösung einen mittleren Partikeldurchmesser bestimmt durch Titration nach Sears von 1,8 bis 3 nm aufweist.

15. Verfahren gemäß einem der vorhergehenden Ansprüche, **dadurch gekennzeichnet, dass** das Kieselsäuresol eine Viskosität von kleiner 10 mPas bei 25°C aufweist.

16. Verfahren gemäß einem der vorhergehenden Ansprüche, **dadurch gekennzeichnet, dass** die Kieselsäureverbindung unter Verwendung von Kationenaustauscherharzen und Einsatz von Natriumwasserglas ($Na_4SiO_4$) oder dessen Oligomeren, und vorzugsweise innerhalb von 24 Stunden nach Herstellung eingesetzt wird.

17. Verfahren gemäß einem der vorhergehenden Ansprüche, **dadurch gekennzeichnet, dass** während der Hydrolyse und/oder während der hydrothermalen Alterung ein Mischenergieeintrag erfolgt, der einer Rührerumfangsgeschwindigkeit von 1 bis 6 m/s, bevorzugt 1,5 bis 5 m/s, entspricht.

18. Verfahren gemäß einem der vorhergehenden Ansprüche, **dadurch gekennzeichnet, dass** zumindest 90 Gew.% der Titanverbindung hydrolysierbar sind und unabhängig hiervon zumindest 60 Gew.% ein Titanalkoholat sind.

19. Verfahren gemäß einem der vorhergehenden Ansprüche, **dadurch gekennzeichnet, dass** die Kieselsäureverbindung in Form des wässrigen Kieselsäuresols im Wesentlichen frei von Kieselsäuresalzen mit kleiner 300 ppm, insbesondere kleiner 200 ppm, Metallionen, vorzugsweise jeweils einschließlich Ammonium, ist.

**20.** $TiO_2/SiO_2$-Mischoxid, **dadurch gekennzeichnet, dass** dieses

- kleiner 25 Gew.% $SiO_2$, bezogen auf die Summe an $SiO_2$ und $TiO_2$ enthält,
- bezogen auf den $TiO_2$-Gehalt zu größer 95 Gew.%, bezogen auf das gesamte Mischoxid, in der Anatasphase vorliegt,
- Porenvolumina von größer 0,50 ml/g,
- einen Gehalt an Sulfat von kleiner 200 ppm und eine Rutilumwandlungstemperatur von größer 1000 °C aufweist.

**21.** Mischoxid gemäß Anspruch 20, **dadurch gekennzeichnet, dass** dieses eine Gesamtreinheit von über 99,9 Gew.%, bezogen auf das Verhältnis $TiO_2$ und $SiO_2$ zur oxidischen Gesamtmasse, aufweist.

**22.** Mischoxid gemäß zumindest einem der Ansprüche 20 oder 21, **dadurch gekennzeichnet, dass** dieses nach einem Verfahren gemäß den Ansprüchen 1 bis 19 erhältlich ist.

**23.** Mischoxid gemäß zumindest einem der Ansprüche 20 bis 22, **dadurch gekennzeichnet, dass** dieses $SiO_2$-Gehalte von kleiner 20 Gew.% und besonders bevorzugt von kleiner 15 Gew.% aufweist.

**24.** Verwendung des Mischoxides gemäß zumindest einem der Ansprüche 20 bis 23 als Katalysatorträger, insbesondere für Metalle oder Metallverbindungen umfassend Metalle ausgewählt aus der Gruppe: Silber, Kupfer, Ruthenium, Palladium, Cobalt und/oder Platin.

**Claims**

**1.** A process for the manufacture of $TiO_2/SiO_2$ mixed oxides or the hydrates and/or oxide hydrates thereof comprising 0.5 to 95 wt% Si, based on the sum of Ti and Si and calculated as $SiO_2$ and $TiO_2$, respectively, by bringing into contact a titanium compound or the hydrolysis product thereof with a silicic acid compound in an aqueous environment, wherein

- the titanium compound is or comprises a titanium alcoholate comprising at least one $C_1$- to $C_{16}$ alcoholate group,
- the process comprises the hydrolysis of the titanium compound, wherein the hydrolysis is carried out in the presence or in the absence of the silicic acid compound, and
- the silicic acid compound is prepared via cation-exchanger, the silicic acid compound is an aqueous silicic acid sol, comprising silicic acid, and the silicic acid compound has an average particle size of 1.8 to 6 nm measured by Sears titration.

**2.** The process according to claim 1,
**characterised in that** the process further comprises drying of the resultant product and/or calcination at above 350°C, particularly above 550°C, for at least 30 minutes.

**3.** A process according to any one of the preceding claims,
**characterised in that** the titanium compound is hydrolysed at 25 to 100°C, wherein in case the hydrolysis is carried out in the presence of ammonium bicarbonate or amino acids, hydrolysis temperatures of 25 to 35°C are preferred, whereas in the absence of same the hydrolysis temperature preferably is between 70 and 100°C.

**4.** A process according to any one of the preceding claims,
**characterised in that** the silica acid sol comprises 1.0 to 8.0 wt%, preferably 2.0 to 5.0 wt%, silicic acid, each calculated as $SiO_2$.

**5.** A process according to any one of the preceding claims,
**characterised in that** the process also comprises the removal of excess alcohol by azeotropic steam distillation, wherein the removal takes place after the hydrolysis step of the titanium compound or after addition of the silicic acid compound, preferably after addition of the silicic acid.

**6.** A process according to any one of the preceding claims,
**characterised in that** before, during or after addition of the silicic acid compound, preferably after addition of the silicic acid compound, hydrothermal aging is carried out at temperatures from 90 to 235°C, preferably 150 to 210°C, for at least 1 hour, preferably 4 to 24 h, and irrespective of this, especially at the pressure established at these temperatures in a closed vessel, and the hydrothermal aging is optionally carried out in several steps at different temperatures and pressures.

7. A process according to any one of the preceding claims,
**characterised in that** hydrolysis and/or hydrothermal aging is (are) carried out in the presence of additives selected from among the group comprising ammonia, ammonium bicarbonate, amino acids, and mono-, di- and tri-carboxylic acids or mixtures thereof, especially mixtures comprised of

- ammonia and amino acids,
- ammonia on one hand and mono-, di- and/or tricarboxylic acids on the other hand, and
- amino acids on one hand and mono-, di- and/or tricarboxylic acids on the other hand,

wherein the mono-, di- and/or tricarboxylic acids are optionally additionally substituted by at least one hydroxy- or carboxyl- or oxo- and/or amino group.

8. The process according to claim 7,
**characterised in that** the additives are employed in quantities from 0.1 to 8.0 wt%, preferably 0.2 to 2.5 wt%.

9. A process according to any one of the preceding claims,
**characterised in that** hydrolysis and/or hydrothermal aging is (are) performed at a pH value of the resultant aqueous slurries of less than pH = 10.0, preferably less than pH = 7.0.

10. A process according to any one of the preceding claims,
**characterised in that** the resultant mixed-oxide product is dried via spray-drying.

11. A process according to any one of the preceding claims,
**characterised in that** the $TiO_2/SiO_2$ mixed oxide or the hydrates and/or oxide hydrates thereof contain more than 5 and less than 40 wt% Si, particularly less than 25 wt% Si, based on the sum of Ti and Si and calculated as $SiO_2$ and $TiO_2$, respectively.

12. A process according to any one of the preceding claims,
**characterised in that** the titanium compound is hydrolysed in the presence of the silicic acid compound.

13. A process according to any one of claims 1 to 11,
**characterised in that** at first the titanium compound is hydrolysed, the alcohol compounds are optionally removed, and the silicic acid compound is added thereafter.

14. A process according to any one of the preceding claims,
**characterised in that** the silicic acid compound in aqueous solution has an average particle size of 1.8 to 3.0 nm measured by Sears titration.

15. A process according to any one of the preceding claims,
**characterised in that** the silica sol has a viscosity of less than 10 mPas at 25°C.

16. A process according to any one of the preceding claims,
**characterised in that** the silicic acid compound is prepared using cation-exchange resins and use of sodium waterglass ($Na_4SiO_4$) or the oligomers thereof, and is preferably used within 24 hours after preparation.

17. A process according to any one of the preceding claims,
**characterised in that** during hydrolysis and/or hydrothermal aging the mixing energy input is applied, which corresponds to a stirrer circumferential velocity of 1 to 6 m/s, preferably 1.5 to 5 m/s.

18. A process according to any one of the preceding claims,
**characterised in that** at least 90 wt% of the titanium compound is hydrolysable and irrespective of the latter at least 60 wt% is a titanium alcoholate.

19. A process according to any one of the preceding claims,
**characterised in that** the silicic acid compound in form of the aqueous silicic acid sol is substantially free of silicic acid salt namely up to maximum of 300 ppm, in particular up to a maximum of 200 ppm metal ions, preferably each including ammonium.

**20.** A $TiO_2$/$SiO_2$ mixed oxide **characterised in that** the same

- contains less than 25 wt% $SiO_2$, based on the sum of $SiO_2$ and $TiO_2$,
- with respect to the $TiO_2$ content is present in the anatase phase in an amount of greater 95 wt%, referring to the total mixed oxide,
- has a pore volume of greater 0.50 ml/g,
- has a sulphate content smaller than 200 ppm, and
- has a rutile formation temperature of greater 1,000°C.

**21.** A mixed oxide according to claim 20,
**characterised in that** same has a total purity of greater 99.9 wt%, based on the $TiO_2$ / $SiO_2$ ratio to the total oxidic mass.

**22.** A mixed oxide according to at least one of the claims 20 or 21,
**characterised in that** same is obtainable by a process according to any one of the claims 1 to 19.

**23.** A mixed oxide according to at least one of the claims 20 to 22,
**characterised in that** same has a$SiO_2$ content of less than 20 wt%, most preferably less than 15 wt%.

**24.** Use of the mixed oxide according to at least one of the claims 20 to 23 as a catalyst carrier, especially for metals or metal compounds comprising metals selected from the group consisting of silver, copper, ruthenium, palladium, cobalt, and/or platinum.

## Revendications

**1.** Procédé de préparation d'oxydes mixtes de $TiO_2$/$SiO_2$ ou de leurs hydrates et/ou oxyhydrates, contenant 0,5 à 95 % en poids de Si, par rapport à la somme de Ti et de Si et calculés respectivement sous forme de $SiO_2$ et de $TiO_2$, par mise en contact d'un composé de titane ou de son produit d'hydrolyse et d'un composé d'acide silicique dans un milieu aqueux, dans lequel

- le composé de titane est ou comprend un alcoolate de titane, présentant au moins un groupe alcoolate en $C_1$ à $C_6$,
- le procédé comprend l'hydrolyse du composé de titane, laquelle s'effectue en présence ou en l'absence du composé d'acide silicique, et
- le composé d'acide silicique est préparé sur des échangeurs de cations, le composé d'acide silicique est un sol d'acide silicique aqueux, qui comprend de l'acide silicique, et le composé d'acide silicique présente un diamètre moyen de particules déterminé par titrage selon Sears de 1,8 à 6 nm.

**2.** Procédé selon la revendication 1, **caractérisé en ce que** le procédé comprend en outre le séchage du produit obtenu et/ou la calcination à plus de 350°C, notamment à plus de 550°C, pendant au moins 30 min.

**3.** Procédé selon l'une des revendications précédentes, **caractérisé en ce que** l'hydrolyse du composé de titane s'effectue à une température de 25 à 100°C, des températures d'hydrolyse de 25 à 35°C étant préférées quand l'hydrolyse est réalisée en présence d'hydrogénocarbonate d'ammonium ou d'acides aminés, et des températures d'hydrolyse de 70 à 100°C étant préférées en leur absence.

**4.** Procédé selon l'une des revendications précédentes, **caractérisé en ce que** le sol d'acide silicique comprend 1,0 à 8,0 % en poids, de préférence 2,0 à 5,0 % en poids d'acide silicique, calculé respectivement sous forme de $SiO_2$.

**5.** Procédé selon l'une des revendications précédentes, **caractérisé en ce que** le procédé comprend en outre l'élimination de l'alcool excédentaire par distillation azéotrope à la vapeur d'eau, l'élimination se faisant après l'étape d'hydrolyse du composé de titane ou après l'addition du composé d'acide silicique, de préférence après l'addition du composé d'acide silicique.

**6.** Procédé selon l'une des revendications précédentes, **caractérisé en ce que**, pendant ou après l'addition du composé d'acide silicique, de préférence après l'addition du composé d'acide silicique, un vieillissement hydrothermique s'effectue à des températures de 90 à 235°C, de préférence de 150 à 210°C, pendant au moins 1 heure, de préférence 4 h à 24 h, et indépendamment de ce paramètre, en particulier à la pression se formant sous ces températures dans un récipient fermé, et le vieillissement hydrothermique s'effectue le cas échéant aussi sous la forme de plusieurs étapes de traitement à des températures et des pressions différentes.

**7.** Procédé selon l'une des revendications précédentes, **caractérisé en ce que** l'hydrolyse et/ou le vieillissement hydrothermique s'effectue en présence d'additifs, choisis dans le groupe comprenant l'ammoniac, l'hydrogénocarbonate d'ammonium, les acides aminés et les acides mono-, di- et tricarboxyliques, ou leurs mélanges, en particulier les mélanges comprenant

- de l'ammoniac et des acides aminés,
- de l'ammoniac d'une part et des acides mono-, di- et/ou tricarboxyliques d'autre part, et
- des acides aminés d'une part et des acides mono-, di- et/ou tricarboxyliques d'autre part, les acides mono-, di- et/ou tricarboxyliques étant le cas échéant en outre substitués par au moins un groupe hydroxy ou carboxyle ou oxo et/ou amino.

**8.** Procédé selon la revendication 7, **caractérisé en ce que** les additifs sont mis en oeuvre à un taux de 0,1 à 8,0 % en poids, de préférence 0,2 à 2,5 % en poids.

**9.** Procédé selon l'une des revendications précédentes, **caractérisé en ce que** l'hydrolyse et/ou le vieillissement hydrothermique s'effectue à un pH de la suspension aqueuse résultante inférieur à pH = 10,0, de préférence inférieur à pH = 7,0.

**10.** Procédé selon l'une des revendications précédentes, **caractérisé en ce que** le produit d'oxyde mixte obtenu est séché par pulvérisation.

**11.** Procédé selon l'une des revendications précédentes, **caractérisé en ce que** l'oxyde mixte de $TiO_2/SiO_2$ ou ses hydrates et/ou ses oxyhydrates contient plus de 5 et moins de 40 % en poids de Si, en particulier moins de 25 % en poids de Si, par rapport à la somme de Ti et Si, et calculés respectivement sous forme de $SiO_2$ et $TiO_2$.

**12.** Procédé selon l'une des revendications précédentes, **caractérisé en ce que** le composé de titane est hydrolysé en présence du composé d'acide silicique.

**13.** Procédé selon l'une des revendications 1 à 11, **caractérisé en ce que** le composé de titane est d'abord hydrolysé, puis le cas échéant les composés d'alcool sont éliminés, et par la suite le composé d'acide silicique est ajouté.

**14.** Procédé selon l'une des revendications précédentes, **caractérisé en ce que** le composé d'acide silicique en solution aqueuse présente un diamètre moyen de particules déterminé par titrage selon Sears de 1,8 à 3 nm.

**15.** Procédé selon l'une des revendications précédentes, **caractérisé en ce que** le sol d'acide silicique présente une viscosité inférieure à 10 mPas à 25°C.

**16.** Procédé selon l'une des revendications précédentes, **caractérisé en ce que** le composé d'acide silicique est mis en oeuvre en utilisant des résines échangeuses de cations et du verre soluble de silicate de sodium ($Na_4SiO_4$) ou son oligomère, et de préférence dans les 24 heures suivant sa préparation.

**17.** Procédé selon l'une des revendications précédentes, **caractérisé en ce que** l'on réalise pendant l'hydrolyse et/ou le vieillissement hydrothermique un apport d'énergie de mélange, qui correspond à une vitesse périphérique d'agitation de 1 à 6 m/s, de préférence 1,5 à 5 m/s.

**18.** Procédé selon l'une des revendications précédentes, **caractérisé en ce qu'**au moins 90 % en poids du composé de titane est hydrolysable et, indépendamment de ce paramètre, au moins 60 % en poids de celui-ci sont constitués par un alcoolate de titane.

**19.** Procédé selon l'une des revendications précédentes, **caractérisé en ce que** le composé d'acide silicique sous forme de sol aqueux d'acide silicique est sensiblement exempt de sels d'acide silicique avec moins de 300 ppm, en particulier moins de 200 ppm d'ions métalliques, de préférence à chaque fois ammonium inclus.

20. Oxyde mixte de $TiO_2/SiO_2$, **caractérisé en ce que** celui-ci

- contient moins de 25 % en poids de $SiO_2$, par rapport à la somme du $SiO_2$ et du $TiO_2$,
- se présente en phase anatase par rapport à la teneur en $TiO_2$ à plus de 95 % en poids, par rapport à la totalité de l'oxyde mixte,
- présente des volumes de pores supérieurs à 0,50 ml/g,
- présente une teneur en sulfate inférieure à 200 ppm et une température de transformation en rutile supérieure à 1000°C.

21. Oxyde mixte selon la revendication 20, **caractérisé en ce que** celui-ci présente une pureté totale de plus de 99,9 % en poids, par rapport au rapport du $TiO_2$ et du $SiO_2$ sur la masse totale de l'oxyde.

22. Oxyde mixte selon au moins l'une des revendications 20 ou 21, **caractérisé en ce que** celui-ci peut être obtenu par un procédé selon les revendications 1 à 19.

23. Oxyde mixte selon au moins l'une des revendications 20 à 22, **caractérisé en ce que** celui-ci présente des teneurs en $SiO_2$ inférieures à 20 % en poids et particulièrement préférentiellement inférieures à 15 % en poids.

24. Utilisation de l'oxyde mixte selon au moins l'une des revendications 20 à 23 comme support de catalyseur, en particulier pour des métaux ou des composés métalliques, comprenant des métaux choisis dans le groupe constitué par l'argent, le cuivre, le ruthénium, le palladium, le cobalt et/ou le platine.

**Fig. 1**

**Fig. 2**

## Fig. 3

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3823895

**In der Beschreibung aufgeführte Nicht-Patentliteratur**

- **LI Z et al.** Comparative study of sol-gel-hydrothermal and sol-gel synthesis of titania-silica composite nanoparticles. *Journal of Solid State Chemistry,* 2005, vol. 178, 1395-1405

- **XIE C et al.** Enhanced photocatalytic activity of titania-silica mixed oxide prepared via basic hydrolyzation. *Materials Science & Engineering B,* 2004, vol. 112, 34-41
- **G. W. SEARS.** *Anal. Chemistry,* 1956, vol. 12, 1982-83